(19) **Europäisches Patentamt / European Patent Office / Office européen des brevets**

(11) **EP 3 385 635 B1**

(12) **EUROPEAN PATENT SPECIFICATION**

(45) Date of publication and mention of the grant of the patent:
**06.05.2020 Bulletin 2020/19**

(21) Application number: **16892718.4**

(22) Date of filing: **06.12.2016**

(51) Int Cl.:
*F24F 13/22* (2006.01)      *G01N 29/04* (2006.01)
*G01N 29/11* (2006.01)      *G01N 29/22* (2006.01)
*G01N 29/32* (2006.01)      *F24F 11/89* (2018.01)
*F24F 6/00* (2006.01)

(86) International application number:
**PCT/JP2016/086266**

(87) International publication number:
**WO 2017/149883 (08.09.2017 Gazette 2017/36)**

(54) **AIR CONDITIONER**

KLIMAANLAGE

CLIMATISEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.03.2016 JP 2016041357**

(43) Date of publication of application:
**10.10.2018 Bulletin 2018/41**

(73) Proprietor: **Mitsubishi Electric Corporation**
**Chiyoda-ku**
**Tokyo 100-8310 (JP)**

(72) Inventors:
• **MORIKAWA, Akira**
  **Tokyo 100-8310 (JP)**
• **NOMURA, Akane**
  **Tokyo 100-8310 (JP)**

• **SAITO, Tadashi**
  **Tokyo 100-8310 (JP)**
• **HIRASHIKI, Isamu**
  **Tokyo 100-8310 (JP)**

(74) Representative: **Mewburn Ellis LLP**
**Aurora Building**
**Counterslip**
**Bristol BS1 6BX (GB)**

(56) References cited:
**EP-A1- 2 975 395          WO-A1-2011/013446**
**WO-A1-2011/013446     JP-A- H05 141 686**
**JP-A- H08 122 263        JP-A- 2009 127 983**
**JP-A- 2009 300 003       US-A- 5 966 959**
**US-A1- 2008 215 248     US-A1- 2011 112 776**

## Description

Technical Field

The present invention relates to an air-conditioning apparatus. The present invention relates to, in particular, an air-conditioning apparatus configured to detect a biofilm formed in a drain pan.

Background Art

Some commonly known air-conditioning apparatuses, for example, an air-conditioning apparatus described in Patent Literature 1, include a heat exchanger, a drain pan configured to receive drain water flowing down from the heat exchanger, and a drain pump configured to pump up and drain out the drain water pooled in the drain pan.

As an example of a total heat exchange ventilator with humidifying function, which is a type of air-conditioning apparatus capable of humidification using a humidifying element, an air-conditioning apparatus is described in Patent Literature 2. In a total heat exchange ventilator with humidifying function, drain water pooled in a drain pan that receives unused excess humidifying water is either drained to the outside naturally by gravity due to the slope of the drain pipe or forcibly drained to the outside by the drain pump.

In either method, microbial growth occurring in the drain water pooled in the drain pan gives rise to formation of semi-solid slime called biofilm. Biofilms may clog the drain pump or drain hose, and are not desirable also from the hygienic point of view. Drain pans, which are also called sumps, are subject to statutory inspection under building hygiene regulations, and thus require regular cleaning or maintenance. Further, a drain pan is integrated with the drain pump or other components inside the air-conditioning apparatus. This means that operations such as cleaning or maintenance of the drain pan require disassembly of the air-conditioning apparatus, which is extremely laborious and costly if, for example, the air-conditioning apparatus is disposed in the space above a ceiling.

Patent Literature 3 discloses a method that employs an ultrasound transmitting device to detect deposits that form on the inner surface of pipes. According to this method, a probe is placed at each opposite end of a pipe of interest and, with the pipe filled with water, an ultrasonic wave generated by the ultrasound transmitting device is transmitted and received between the probes at the opposite ends to thereby detect the presence of any deposit such as a biofilm within the pipe.

Citation List

Patent Literature

Patent Literature 1: Japanese Unexamined Patent Application Publication No. 2001-21208
Patent Literature 2: Japanese Unexamined Patent Application Publication No. 2014-52095
Patent Literature 3: Japanese Patent No. 4257076

EP 2 975 395 A1 describes a domestic appliance, with an area traversed by a fluid, in particular a liquid, as well as with a device control designed to detect a deposit characteristic value, wherein the household appliance comprises a measuring device which is characteristic for detecting the deposit characteristic value is designed by means of a surface acoustic wave.

US 2008/215248 A1 describes a method and device to monitor the formation and removal of biofilms and other deposits in ducts, reservoirs and equipments, using vibration. The device is composed by an element that generates vibration and an element that senses vibration, fixed on the external surface of a duct, reservoir or equipment.

US 2011/112776 A1 describes a system to measure the internal state of a bundle of tubes by injecting a signal into each tube of the bundle, receiving reflections from the tube due to anomalies within the tube, then analyzing the reflections to determine the type or characteristics about the anomalies.

JP H05 141686 A describes a drain pump being provided above a drain pan, and connected to a microcomputer for controlling an operation of an air conditioner through a drain pump driver. An ultrasonic sensor is provided at a position capable of measuring a distance to a water level of drain water above the inner surface of the pan, and connected to the microcomputer through a water level distance measuring circuit.

US 5,966,959 A describes a condensate drain pan arrangement with a positive slope. The drain pan arrangement comprises a housing including a first wall with a first aperture, a second wall with a second aperture where the first and second walls are spaced; a coil located in the space in the housing and between the first and second walls; and a drain pan having a condensate receiving portion within the housing and located under the coil.

WO 2011/013446 A1 describes a guide member for guiding a tube element such as a water drain tube, wherein a drain port and a water drain plug, which are used to drain water when a maintenance is performed, are removed, so that a water leakage problem caused by the water drain plug can be completely resolved. A guide member is attached to an inspection opening of a casing in an air conditioner wherein an air blower, a heat exchanger, a drain pan, and a drain pump are disposed within the casing, and guides a flexible tube element. The guide member is provided with a guide passage which allows the tube element to be inserted and a positioning means for positioning the guide member with respect to the inspection opening. The guide passage is oriented downward so that the tip of the inserted tube element reaches the vicinity of the bottom surface of the drain pan.

Summary of Invention

Technical Problem

If the ultrasonic technique described in Patent Literature 3 is used to detect the presence or absence of a biofilm in the drain pan, a biofilm is determined to be present if a reflected ultrasonic wave is detected. It may be noted, however, that if an ultrasonic wave is directed toward a drain pan where water has pooled, the ultrasonic wave is reflected by the surface of the water on the drain pan. In this case, the reflected ultrasonic wave, even though not reflected back from a biofilm, is misidentified as a reflection from a biofilm, and it is not possible to determine the presence or absence of a biofilm.

The present invention has been made to address the above-mentioned problem, and accordingly it is an object of the invention to provide an air-conditioning apparatus that makes it possible to determine the presence or absence of a biofilm without the influence of a reflection from the surface of water on the drain pan.

Solution to Problem

According to an embodiment of the present invention, there is provided an air-conditioning apparatus according to the independent claim.

Advantageous Effects of Invention

With the air-conditioning apparatus according to an embodiment of the present invention, when draining of water is determined to be complete, the detection unit performs the detection of whether a biofilm is present. Consequently, the detection is performed with water drained from the drain pan. This makes it possible to prevent a detection result due to a biofilm to be misidentified by a detection result due to the surface of water in the drain pan, and also facilitate the determination of whether a biofilm is present.

Brief Description of Drawings

[Fig. 1] Fig. 1 is a schematic diagram of a cross-section of an air-conditioning apparatus according to Embodiment 1.
[Fig. 2] Fig. 2 is a schematic diagram illustrating, in cross-section, a portion of the air-conditioning apparatus according to Embodiment 1 in the vicinity of a drain pan.
[Fig. 3] Fig. 3 is a schematic diagram of an ultrasound transmitter of a detection unit provided to the drain pan illustrated in Fig. 2.
[Fig. 4] Fig. 4 is a flowchart illustrating operation of the air-conditioning apparatus according to Embodiment 1.
[Fig. 5] Fig. 5 is a schematic diagram illustrating, in cross-section, a portion of the air-conditioning apparatus according to Embodiment 1 in the vicinity of a drain pan during humidifying operation or cooling operation.
[Fig. 6] Fig. 6 is a graph illustrating ultrasound response in the state illustrated in Fig. 2 with drain water drained out.
[Fig. 7] Fig. 7 schematically illustrates a division plate according to Embodiment 1 used to extract a portion of a mixture of a biofilm and drain water.
[Fig. 8] Fig. 8 is a graph illustrating how the water content per unit area of a mixture of a biofilm and drain water changes after humidifying operation of the air-conditioning apparatus according to Embodiment 1 is stopped.
[Fig. 9] Fig. 9 is a schematic diagram of the air-conditioning apparatus according to Embodiment 1 with drain water pooled in a drain pan.
[Fig. 10] Fig. 10 is a graph illustrating ultrasound response in the state illustrated in Fig. 9 with drain water pooled in a drain pan.
[Fig. 11] Fig. 11 a schematic diagram of the air-conditioning apparatus according to Embodiment 1 with a biofilm formed and drain water pooled in a drain pan.

[Fig. 12] Fig. 12 is a graph illustrating ultrasound response in the state illustrated in Fig. 11 with a biofilm formed and drain water pooled in a drain pan.

[Fig. 13] Fig. 13 is a schematic diagram illustrating, in cross-section, a portion of an air-conditioning apparatus according to Embodiment 2 in the vicinity of a drain pan.

[Fig. 14] Fig. 14 is a schematic diagram illustrating, in cross-section, a portion of the air-conditioning apparatus according to Embodiment 2 in the vicinity of a drain pan with humidifying operation or cooling/heating operation ended and power supply stopped.

[Fig. 15] Fig. 15 is a schematic diagram illustrating, in cross-section, a portion of an air-conditioning apparatus according to Embodiment 3 in the vicinity of a drain pan.

[Fig. 16] Fig. 16 is a schematic diagram illustrating, in cross-section, a portion of the air-conditioning apparatus according to Embodiment 3 in the vicinity of a drain pan during humidifying operation or cooling operation.

[Fig. 17] Fig. 17 is a schematic diagram illustrating, in cross-section, a portion of an air-conditioning apparatus according to Embodiment 4 in the vicinity of a drain pan.

[Fig. 18] Fig. 18 schematically illustrates operation of a detection unit of the air-conditioning apparatus according to Embodiment 4.

[Fig. 19] Fig. 19 is a schematic diagram illustrating, in cross-section, a portion of an air-conditioning apparatus according to Embodiment 5 in the vicinity of a drain pan.

[Fig. 20] Fig. 20 illustrates experimental results obtained with the air-conditioning apparatus according to Embodiment 5 in its initial state.

[Fig. 21] Fig. 21 illustrates experimental results obtained before draining of the air-conditioning apparatus according to Embodiment 5.

[Fig. 22] Fig. 22 illustrates experimental results obtained after draining of the air-conditioning apparatus according to Embodiment 5.

[Fig. 23] Fig. 23 illustrates how ultrasound intensity and water content per unit area change with time according to Embodiment 5.

[Fig. 24] Fig. 24 is a schematic diagram illustrating a portion of the air-conditioning apparatus according to a modification of Embodiment 5 in the vicinity of a drain pan.

[Fig. 25] Fig. 25 is a schematic diagram illustrating, in cross-section, a portion of an air-conditioning apparatus according to Embodiment 6 in the vicinity of a drain pan.

[Fig. 26] Fig. 26 is a schematic diagram illustrating, in cross-section, a portion of an air-conditioning apparatus according to Embodiment 7 in the vicinity of a drain pan.

[Fig. 27] Fig. 27 is a schematic diagram illustrating, in cross-section, a portion of an air-conditioning apparatus according to Embodiment 8 in the vicinity of a drain pan.

[Fig. 28] Fig. 28 is a schematic diagram illustrating, in cross-section, a portion of an air-conditioning apparatus according to Embodiment 9 in the vicinity of a drain pan.

Description of Embodiments

Embodiment 1

<Configuration of Air-Conditioning Apparatus 100>

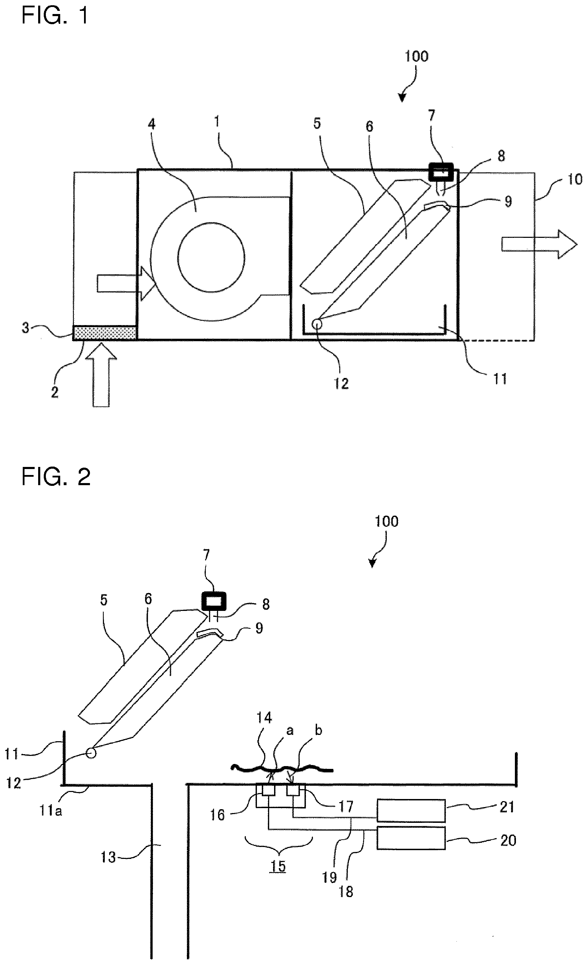

Fig. 1 is a schematic diagram of a cross-section of an air-conditioning apparatus 100 according to Embodiment 1. In Fig. 1, empty arrows indicate the direction of airflow. As illustrated in Fig. 1, the air-conditioning apparatus 100 according to Embodiment 1 includes the following components inside a housing 1: a fan 4, a heat exchanger 5, a humidifying material 6, a drain pan 11, and a supply unit 7 that supplies humidifying water used for humidification. The air-conditioning apparatus 100 has a cooling function, a heating function, and a humidifying function. An air inlet 2 that opens at the bottom of the housing 1 is provided on one lateral side of the casing 1. An air outlet 10 is provided on the other lateral side of the housing 1. As the fan 4 is driven, air is sucked into the air-conditioning apparatus 100 from the air inlet 2, and conditioned air that has passed through the heat exchanger 5 is blown out from the air outlet 10.

A filter 3 is placed over the air inlet 2 to remove dust from air sucked into the housing 1. The fan 4 is disposed downstream of the filter 3 such that air sucked upward from the air inlet 2 is directed into the housing 1 through the filter 3.

The heat exchanger 5 is located downstream of the fan 4. The heat exchanger 5 is placed at an inclination such that its lower end portion is at its upstream side, with the upper end portion being at the downstream side. The heat exchanger 5 is of, for example, fin-and-tube construction made of aluminum. The heat exchanger 5 allows heat exchange between passing ambient air and the refrigerant flowing within the heat exchanger 5 to thereby heat or cool the air.

The humidifying material 6 is formed by a plurality of plate-like members placed erected in parallel to each other. The humidifying material 6 is disposed along the inclination of the heat exchanger 5 at a position below the heat exchanger 5, and has a shape such as obtained by shear deformation. The humidifying material 6 has a long side substantially equal in length to the heat exchanger 5. The upper end portion of the humidifying material 6 projects at the end to have, for example, a triangular prism shape, with a dispersing material 9 placed on the upper face of the projected,.e.g. the triangular prism shaped. portion. The supply unit 7 and a nozzle 8 are disposed above the upper end portion of the humidifying material 6 to supply water to the humidifying material 6. Water is supplied to the humidifying material 6 via the dispersing material 9 disposed on the upper face of the humidifying material 6. Although the water used may be either tap water or industrial water, it is desirable to use water containing relatively few scale components that cause deposits, such as calcium, magnesium, or silica.

The drain pan 11 is disposed below the heat exchanger 5 and the humidifying material 6 to receive a water droplet 12 drained from the heat exchanger 5 or the humidifying material 6. The drain pan 11 pools, as drain water 22, the water droplet 12 flowing down naturally due to gravity from the heat exchanger 5 and the humidifying material 6.

<Configuration in Vicinity of Drain Pan 11 >

Fig. 2 is a schematic diagram illustrating, in cross-section, a portion of the air-conditioning apparatus 100 according to Embodiment 1 in the vicinity of the drain pan 11. As illustrated in Fig. 2, a waste pipe 13 is connected to the underside of the drain pan 11, and a detection unit 15 is disposed on the underside of the drain pan 11. The waste pipe 13 drains the drain water 22 pooled in the drain pan 11 to the outside. If the rate of supply of the water droplet 12 to the drain pan 11 is lower than the rate of drainage of the drain water 22 by the waste pipe 13, there is no accumulation of the drain water 22 in the drain pan 11. If the rate of supply of the water droplet 12 to the drain pan 11 is higher than the rate of drainage of the drain water 22 by the waste pipe 13, the level of the drain water 22 rises in the drain pan 11. The waste pipe 13 represents an example of a draining unit according to the present invention. The detection unit 15 is used to detect a biofilm 14 formed on the top of the drain pan 11. The detection unit 15 includes the following components connected by an electric wire 18 and an electric wire 19: a power supply 20, an amplifier/detector circuit 21, an ultrasound transmitter 16, and an ultrasound detector 17.

The biofilm 14, which is formed by conglomeration of adherent polysaccharides metabolized by bacteria, molds, or other microorganisms, and airborne contaminants, is a sticky aggregate also called slime. The biofilm 14 develops on the top of the drain pan 11 when the water droplet 12, having mixed therein floating bacteria or mold spores that float in the vicinity of the air-conditioning apparatus 100, drips down to the drain pan 11. Deposition of the biofilm 14 onto areas such as the joint portion of the waste pipe 13 and the drain pan 11 or wall surfaces impedes draining of the drain water 22. Further, the biofilm 14 may cause growth of bacteria, molds, or other microorganisms harmful to the human body. One example of such hazardous microorganisms is aerobic Gram-negative bacteria called Legionella genus bacteria. A known example of a Legionella incident is the outbreak of pneumonia in 1976 in Pennsylvania, United States, whose cause was identified to be Legionella contained in aerosols emanating from the cooling tower. Legionella, which is a species of Legionella genus bacteria, is referred to as Legionella pneumophila. If Legionella genus bacteria, which are bacteria that normally live in soil or other places, breed in the biofilm 14, and are dissipated into air, this presents a pathogenic risk.

From the hygienic point of view, it is desirable to minimize growth of the biofilm 14. For this reason, for example, monthly inspection and cleaning of the drain pan 11 is recommended as regular inspection. However, the humidifying portion of the air-conditioning apparatus 100 is often placed in the ceiling area, which makes it difficult to disassemble the air-conditioning apparatus 100 for cleaning. Although an antimicrobial may be placed inside the drain pan 11 to prevent growth of the biofilm 14, such an antimicrobial disappears and loses its efficacy over time. Further, the growth rate of the biofilm 14 is greatly dependent on environmental factors such as the amount of nutrients in air. This makes it impossible to determine the presence of growth of the biofilm 14 simply from elapsed time. Desirably, the detection unit 15 provides an alert indicating whether cleaning of the drain pan 11 is needed, based on the determination of whether the biofilm 14 has formed.

The detection unit 15 transmits an ultrasonic wave in the direction of an arrow "a", and detects an ultrasonic wave reflected back from the biofilm 14 in the direction of an arrow "b" to thereby determine the presence or absence of the biofilm 14 that has formed on the top of the drain pan 11. The detection unit 15 is integrated with the drain pan 11 to ensure that there is no gap between the detection unit 15 and the drain pan 11. Any such gap, if present, may cause a reflection to occur at the interface between air and the solid portion. This decreases the magnitude of the transmitting ultrasonic wave, resulting in deteriorated SN ratio. SN ratio is an abbreviation of signal-to-noise ratio. Integrating the detection unit 15 with the drain pan 11 ensures that the material of the detection unit 15 and the material of the drain pan 11 are matched in resonance impedance at the contact area between the detection unit 15 and the drain panel, thus reducing the influence of noise on the detection signal.

<Configuration of Detection Unit 15>

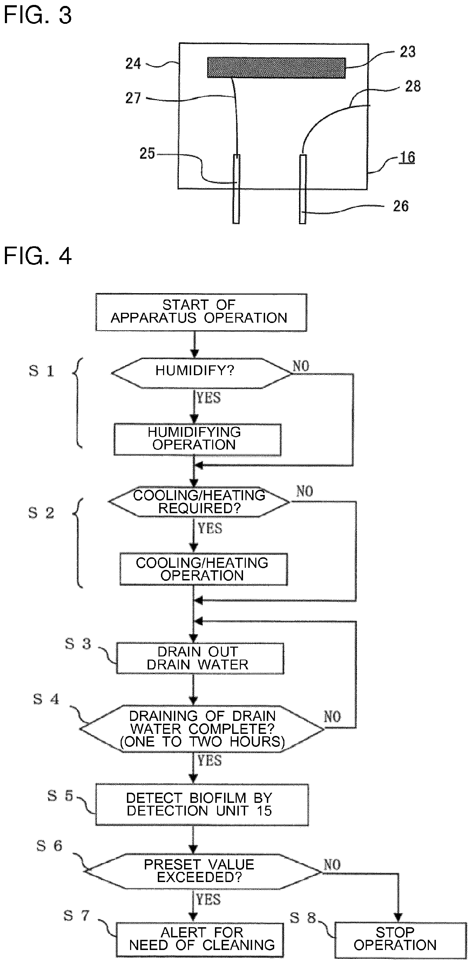

Fig. 3 is a schematic diagram of the ultrasound transmitter 16 of the detection unit 15 provided to the drain pan 11 illustrated in Fig. 2. As illustrated in Fig. 3, the ultrasound transmitter 16 has the following components accommodated in a housing 24: a piezoelectric element 23, an electrode 25, an electrode 26, a lead wire 27, and a lead wire 28. The electrode 25 is electrically connected to the piezoelectric element 23 via the lead wire 27. The electrode 26 is electrically connected to the housing 24 via the lead wire 28. Application of a high-frequency voltage between the electrode 25 and the electrode 26 causes the piezoelectric element 23 to vibrate and generate an ultrasonic wave. The piezoelectric element 23 represents an example of an ultrasonic element according to the present invention.

As with the ultrasound transmitter 16, the ultrasound detector 17 includes the following components accommodated in the housing 24: the piezoelectric element 23, the electrode 25, the electrode 26, the lead wire 27, and the lead wire 28. In the ultrasound detector 17, when ultrasonically induced vibration occurs in the piezoelectric element 23, the vibration produces a voltage, which is converted into an electrical signal and detected by the electrode 25 and the electrode 26. At this time, no voltage is applied between the electrode 25 and the electrode 26 that constitute the ultrasound detector 17.

The ultrasound transmitter 16 and the ultrasound detector 17 represent identical structures. As such, the ultrasound transmitter 16 and the ultrasound detector 17 can be integrated by being accommodated together in the same housing 24. In this case, one of the two structures serve as the ultrasound transmitter 16 to transmit an ultrasonic wave, and the other serves as the ultrasound detector 17 to receive an ultrasonic wave.

It is assumed that the ultrasonic wave used is transmitted as a pulse wave with a frequency not less than 40 kHz and not greater than 500 kHz. Ultrasound generally refers to sound waves with frequencies greater than or equal to 20 kHz. For an ultrasonic wave, the following trade-off relationship holds: the higher its frequency, the higher the resolution but the shorter the distance reached. Accordingly, the ultrasonic wave used desirably has a frequency of 300 kHz. The ultrasonic wave used may not necessarily be transmitted as a pulse wave but may be transmitted as a continuous wave. Provided that the frequency is 300 kHz, and the speed of sound travelling in air is 343 m/sec, the wavelength, $\lambda$, is given as follows: speed of sound 343 / frequency 300 = 1.1 mm. Further, the period, T, is the inverse of frequency, and hence given as follows: 1/300 kHz = $3 \times 10^{-6}$ seconds = 3 microseconds. Although any pulse width may be used, an excessively large pulse width makes the detection difficult. Thus, an appropriate pulse width would be 1 to 5 times the wavelength.

The ultrasonic wave transmitted from the ultrasound transmitter 16 is applied to the biofilm 14. Ultrasound has the characteristic of reflecting off an object's surface. The biofilm 14 has a porous configuration. The ultrasonic wave transmitted from the ultrasound transmitter 16 propagates in air in the direction of the arrow "a" and reaches the surface of the biofilm 14. Then, due to the characteristics of ultrasound and the shape of the biofilm 14, a portion of the ultrasonic wave reaching the surface is reflected back and propagates in the direction of the arrow "b". Upon reaching the ultrasound detector 17, the reflected ultrasonic wave is detected as a response. Another portion of the ultrasonic wave reaching the interface is not reflected by the biofilm 14 but passes through.

<Operation of air-conditioning apparatus 100>

Fig. 4 is a flowchart illustrating operation of the air-conditioning apparatus 100 according to Embodiment 1. As illustrated in Fig. 4, the air-conditioning apparatus 100 is capable of humidifying operation and cooling/heating operation. The air-conditioning apparatus 100 performs air-humidifying operation and cooling/heating operation simultaneously or selectively depending on the required outlet air temperature/humidity conditions. When starting operation, the air-conditioning apparatus 100 determines in step S1 whether to perform humidification. At step S2, the air-conditioning apparatus 100 determines whether cooling/heating operation is required.

<Humidifying Operation>

If it is determined in step S1 in Fig. 4 to perform humidification, and the humidifying operation begins, water stored in the supply unit 7 is transported as humidifying water to the nozzle 8 located above the dispersing material 9. The humidifying water transported to the nozzle 8 is dripped from the tip of the nozzle 8 toward an upper portion of the dispersing material 9. Thus, water is supplied to the humidifying material 6. The humidifying water is uniformly dispersed across the humidifying material 6 by utilizing the capillary action of the dispersing material 9 and gravity, and a fixed amount of humidifying water is retained by the humidifying material 6.

Next, the fan 4 starts to operate. Air sucked in through the air inlet 2 as the fan 4 operates passes through the humidifying material 6 via the filter 3, the fan 4, and the heat exchanger 5, and is transported to the outside of the air-conditioning apparatus 100 equipped with a humidifier, that is, to the indoor space. The humidifying water retained by the humidifying material 6 evaporates upon contact with air and humidifies the air, and is then transported indoors together with the air. Unevaporated, excess humidifying water on the humidifying material 6 that has not been used for humidification collects near the lower end portion of the humidifying material 6 due to gravity, and leaks out from the lower end portion of the humidifying material 6 and drips downward. The water droplet 12 that has leaked and dripped from the humidifying material 6 is supplied to the drain pan 11 and received as the drain water 22. Then, the drain water 22 is drained out through the waste pipe 13. Through this humidifying operation of the humidifier, humidified air is supplied to the space to be humidified.

<Cooling/heating Operation>

If it is determined in step S2 in Fig. 4 that cooling/heating operation is required, and cooling/heating operation is subsequently started, heated or cooled refrigerant is routed through the heat exchanger 5 to heat or cool the surface of the heat exchanger 5. Specifically, in heating operation, heated refrigerant flows into the heat exchanger 5 to heat the surface of the heat exchanger 5, thus heating the air passing through the surface of the heat exchanger 5. In cooling operation, cooled refrigerant flows into the heat exchanger 5 to cool the surface of the heat exchanger 5, thus cooling the air passing through the surface of the heat exchanger 5. When the surface of the heat exchanger 5 drops in temperature during cooling operation, water vapor contained in the air condenses into condensation water on the surface of the heat exchanger 5. The condensation water flows down from the heat exchanger 5, and turns into the water droplet 12 that flows into the drain pan 11 where the water droplet 12 is received as the drain water 22. As with humidifying operation, the drain water 22 is then drained out via the waste pipe 13.

Next, the process proceeds to step S3 where draining of the drain water 22 is started. Then, in step S4, it is determined whether draining of the drain water 22 is complete. At this time, the time taken for the draining to complete may be set as one to two hours. If it is determined in step S4 that draining is complete, in step S5, the detection unit 15 detects whether the biofilm 14 is present. Then in step S6, it is determined whether the biofilm 14 has built up by more than a preset value. If it is determined in step S6 that the biofilm 14 has built up by more than a preset value, the process proceeds to step S7 where an alert is provided to indicate that the drain pan 11 needs to be cleaned. If it is determined in step S6 that the biofilm 14 has not built up by more than a preset value, the process proceeds to step S8, where the operation of the air-conditioning apparatus 100 is regarded as complete and the air-conditioning apparatus 100 deactivates.

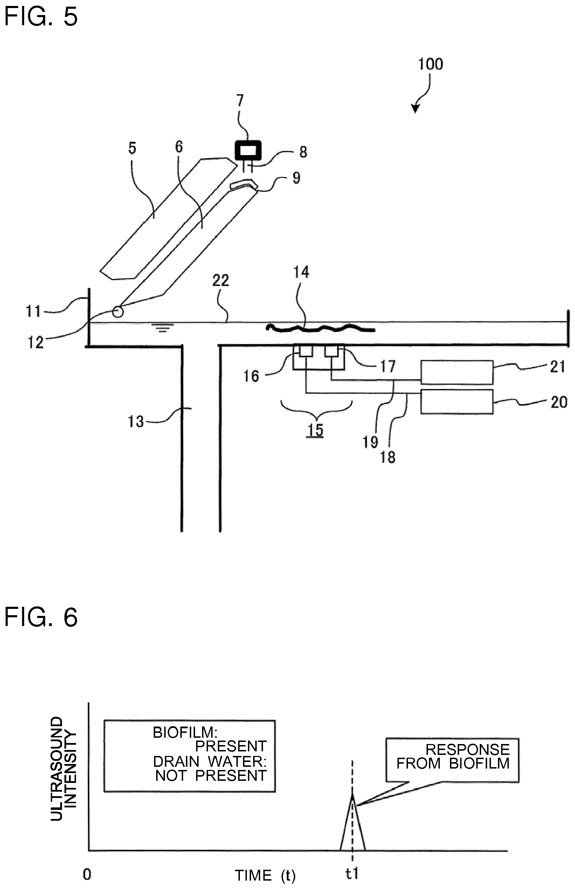

Fig. 5 is a schematic diagram illustrating, in cross-section, a portion of the air-conditioning apparatus 100 according to Embodiment 1 in the vicinity of the drain pan 11 during humidifying operation or cooling operation. As illustrated in Fig. 5, the water droplet 12 received by the drain pan 11 in humidifying operation or cooling operation is pooled in the drain pan 11 as the drain water 22. At the same time, the drain pan 11 is drained of the drain water 22 by the waste pipe 13. When the humidifying operation or cooling operation is subsequently stopped, the water droplet 12 ceases to be supplied and, at the same time, the drain water 22 is drained out through the waste pipe 13, and the draining of the drain water 22 completes when a predetermined period of time elapses.

<Detection of Biofilm 14>

Detection of the biofilm 14 by the detection unit 15 is performed after the humidifying operation or cooling operation of the air-conditioning apparatus 100 is stopped, in a condition with no drain water 22 present. When the humidifying operation or cooling operation is stopped, supply of the water droplet 12 stops, and draining of the drain water 22 by the waste pipe 13 completes when a predetermined period of time elapses. Upon elapse of a predetermined period of time, the detection unit 15 regards the draining as complete, and starts the detection of the biofilm 14.

In the detection unit 15, the piezoelectric element 23 inside the ultrasound transmitter 16 vibrates, and generates an ultrasonic pulse wave with a wavelength of 300 kHz. The ultrasonic wave propagates in air in the direction of the arrow "a", and is reflected at the interface between the biofilm 14 and air. The reflected ultrasonic wave propagates in the direction of the arrow "b", and causes the piezoelectric element 23 of the ultrasound detector 17 to vibrate. Then, a voltage is produced between the electrode 25 and the electrode 26, which is detected by the amplifier/detector circuit 21 as a response from the biofilm 14. The detection unit 15 provides an alert indicating to clean the drain pan 11, based on the response detected by the amplifier/detector circuit 21.

Fig. 6 is a graph illustrating ultrasound response in the state illustrated in Fig. 2 with the drain water 22 drained out. In Fig. 6, the vertical axis represents ultrasound intensity, and the horizontal axis represents time. As illustrated in Fig. 6, in the state illustrated in Fig. 2 with the biofilm 14 present and not submerged in drain water, when an ultrasonic wave is transmitted from the ultrasound transmitter 16 at time t = 0, the ultrasound intensity exhibits a peak value after elapse of time t = t1. The peak value corresponds to an ultrasonic wave received by the ultrasound detector 17 as a response representing an ultrasonic wave propagated in air and reflected at the interface with the biofilm 14. The peak value received at the ultrasound detector 17 represents a response from the biofilm 14.

As described above, the detection unit 15 transmits an ultrasonic wave from the ultrasound transmitter 16 in a state with the drain water 22 drained out, and determines the presence or absence of the biofilm 14 based on whether a reflected ultrasonic wave is received and detected as a response by the ultrasound detector 17. If the presence of the biofilm 14 is detected, an alert is provided to indicate that the drain pan 11 needs to be cleaned. The user is thus able to recognize the presence or absence of the biofilm 14.

With the actual conditions taken into consideration, it is difficult to completely separate the biofilm 14 and the drain water 22 from each other, as the biofilm 14 exists in a state in which the majority of the biofilm 14 contains water. Further, in determining the presence or absence of the biofilm 14 by the detection unit 15, the primary issue is to eliminate interference due to the drain water 22, and completely removing water contained in the biofilm 14 is not important in detecting the biofilm 14. For example, when the biofilm 14 is submerged in the drain water 22 as illustrated in Fig. 5, this corresponds to a state in which both the solid-liquid interface of the biofilm 14 and the vapor-liquid interface of the drain water 22 exist. In this case, the detection of the biofilm 14 is affected by the vapor-liquid interface of the drain water 22. By contrast, with only the biofilm 14 present in the drain pan 11 as illustrated in Fig. 2, the detection of the biofilm 14 is not affected even if there is a localized presence of the drain water 22 in the form of droplets on the bottom surface of the drain pan 11.

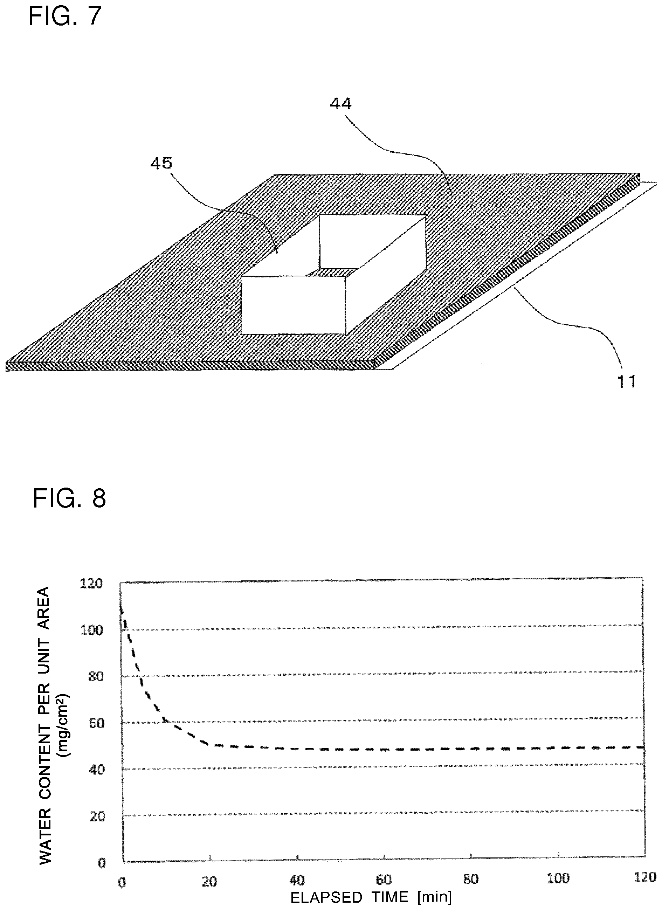

Fig. 7 schematically illustrates a division plate 45 used to extract a portion of a mixture 44 of the biofilm 14 and the drain water 22. As illustrated in Fig. 7, a region with a predetermined area on the bottom surface of the drain pan 11 was partitioned off by the division plate 45, and changes in water content per unit area of the mixture of the biofilm 14 and the drain water 22 were examined. The division plate 45, which has a rectangular hollow configuration, was laid still on the drain pan 11 to partition off a portion of the mixture 44. The area to be partitioned off represents an extraction area, which may be of any size such as 5 cm × 5 cm. The portion of the mixture 44 partitioned off by the division plate 45 is sucked up with a syringe, and the total weight of the extracted mixture 44 was measured. Then, after the extracted mixture 44 was placed in a constant temperature oven at 100 degrees C for three hours to allow water to completely evaporate, the dry weight of the resulting mixture 44 was measured. Then, the water content per unit area of the mixture 44 at this time was calculated by the following equation.

$$\text{water content per unit area (mg/cm}^2\text{)} = \text{(total weight - dry weight) / extraction area}$$

Fig. 8 is a graph illustrating how the water content per unit area of the mixture 44 of the biofilm 14 and the drain water 22 changes after humidifying operation of the air-conditioning apparatus 100 is stopped. In Fig. 8, the horizontal axis represents time having elapsed after the humidifying operation is stopped, and the vertical axis represents water content per unit area. In this case, the biofilm 14 was allowed to form on the bottom surface of the drain pan 11 by repeating the following cycle for 60 days: performing humidifying operation continuously for six hours, and then stopping the humidifying operation for 18 hours. Subsequently, the humidifying operation was performed continuously for six hours to make the biofilm 14 submerged in the drain water 22 and not exposed to the airspace. Then, with this state taken as an elapsed time of zero minutes, the water content per unit area of the mixture 44 of the biofilm 14 and the drain water 22 was calculated to measure changes in water content per unit area with elapsed time.

As illustrated in Fig. 8, at the elapsed time of zero minutes, that is, immediately after the stopping of humidifying operation, the water content of the mixture 44 of the biofilm 14 and the drain water 22 was 110 mg/cm$^2$. Then, as time elapsed, the water level in the drain pan 11 lowered due to drainage by the waste pipe 13, causing per-unit water content to rapidly decrease, reaching 50 mg/cm$^2$ at an elapsed time of 20 minutes. After the elapsed time of 20 minutes, the water content became substantially steady at 50 mg/cm$^2$, and at an elapsed time of 120 minutes, the water content remained substantially the same, at 48 mg/cm$^2$.

Observation of the drain pan 11 in this state indicated that at an elapsed time of zero minutes, the biofilm 14 was submerged in the drain water 22 and not exposed to the surface. By contrast, at and after an elapsed time of 20 minutes, the biofilm 14 was exposed in air.

Ultrasound measurement can be performed without problems if the water content per unit area is within a range of 0 to 50 mg/cm$^2$. If the water content per unit area exceeds 50 mg/cm$^2$, however, the biofilm 14 becomes submerged in water, and the measurement becomes subject to the influence of the interface of the drain water 22. In other words, by performing ultrasound measurement under a condition in which the water content per unit area is less than or equal to 50 mg/cm$^2$, it is possible to exclude the influence of the interface of the drain water 22. Accordingly, in measuring ultrasound, the draining may be determined to be complete at an elapsed time of 20 minutes, and ultrasound measurement may be subsequently performed. It may be noted, however, that the rate of drainage varies with factors such as the size of the waste pipe 13 or the slope of the drain pan 11, and thus the draining completion time may be changed in accordance with the drainage characteristics. In another possible configuration, a time region in which the water content per unit area has become sufficiently steady is determined in advance, and this time may be substituted for the draining completion time.

Now, referring to the experimental results illustrated in Fig. 8, the rate of change in water content per area from an elapsed time of 20 minutes to an elapsed time of 30 minutes was 4%. For example, it may be regarded that a steady state is reached if the rate of change in water content per unit area after the elapse of 10 minutes has become less than or equal to 4%. In this case, the determination of whether the steady state is reached is performed in the following manner: the time elapsed until the steady state is reached is determined in advance, and after the elapse of the determined time, the draining is regarded as complete, and ultrasound measurement is performed.

The bottom surface of the drain pan 11 is made of plastic and thus normally exhibits water repellency. Consequently, as the level of the drain water 22 lowers, the drain water 22 turns into droplets. Accordingly, the draining of the drain water 22 may be regarded as complete if the drain water 22 is present only in a part of the bottom surface of the drain pan in the form of discrete droplets.

Specifically, the time being elapsed until water droplets with a diameter of 20 mm or less become present on the bottom surface of the drain pan 11 may be determined in advance, and the draining is regarded as complete at that point in time. Alternatively, a plurality of water detection sensors that are commercially available as leak detectors to detect the variation of resistance between electrodes may be disposed on the top of the drain pan 11. In this case, draining of the drain water 22 may be regarded as complete at the time when the output value of each water detection sensor drops, or at the time when the variations in output increase.

If neither the biofilm 14 nor the drain water 22 is present, an ultrasonic wave is reflected at the bottom surface of the drain pan 11, and the reflected ultrasonic wave reaches the detection unit 15. The drain pan 11 is made of a plastic such as ABS. The drain pan 11 thus has a higher acoustic impedance than the biofilm 14, water, or other objects, as well as high smoothness, resulting in high ultrasound reflectance. By contrast, the biofilm 14 has large irregularities and thus tends to scatter ultrasound.

Accordingly, the biofilm 14 can be quantified by measuring the intensity of ultrasound in a condition with neither the biofilm 14 nor the drain water 22 present, and measuring, with the measured ultrasound intensity as a base reference, how much ultrasound is scattered. Although the interface of water also tends to scatter or reflect ultrasound, its irregularities are smaller than those of the biofilm 14, which means that the interface scatters less ultrasound than does the biofilm 14, and hence does not greatly affect the measurement.

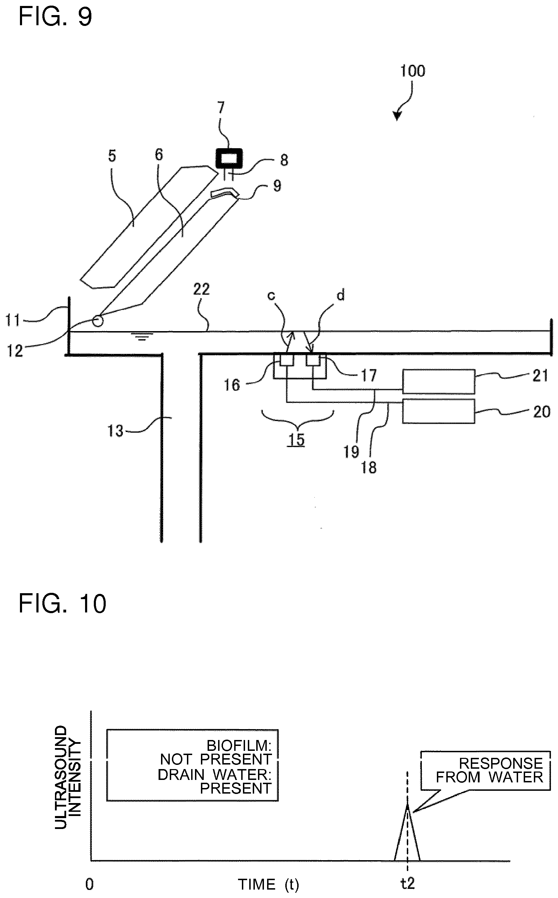

Fig. 9 is a schematic diagram of the air-conditioning apparatus 100 according to Embodiment 1 with the drain water 22 pooled in the drain pan 11. As illustrated in Fig. 9, when an ultrasonic wave is transmitted from the ultrasound transmitter 16 with the drain water 22 pooled in the drain pan 11, the ultrasonic wave propagates in the drain water 22 in the direction of an arrow "c", and reaches the surface of the drain water 22. Then, the ultrasonic wave reflected at the interface between the drain water 22 and air propagates in the direction of an arrow "d", and is detected by the ultrasound detector 17 as a response.

Fig. 10 is a graph illustrating ultrasound response in the state illustrated in Fig. 9 with the drain water 22 pooled in the drain pan 11. As illustrated in Fig. 10, when an ultrasonic wave is transmitted from the ultrasound transmitter 16 at time t = 0, a peak value is detected by the ultrasound detector 17 when time t = t2 elapses. The time t = t2 is determined by the distance from the ultrasound transmitter 16 to the surface of the drain water 22. The time t = t2 decreases with decreasing amount of the drain water 22, and the time t = t2 increases with increasing amount of the drain water 22.

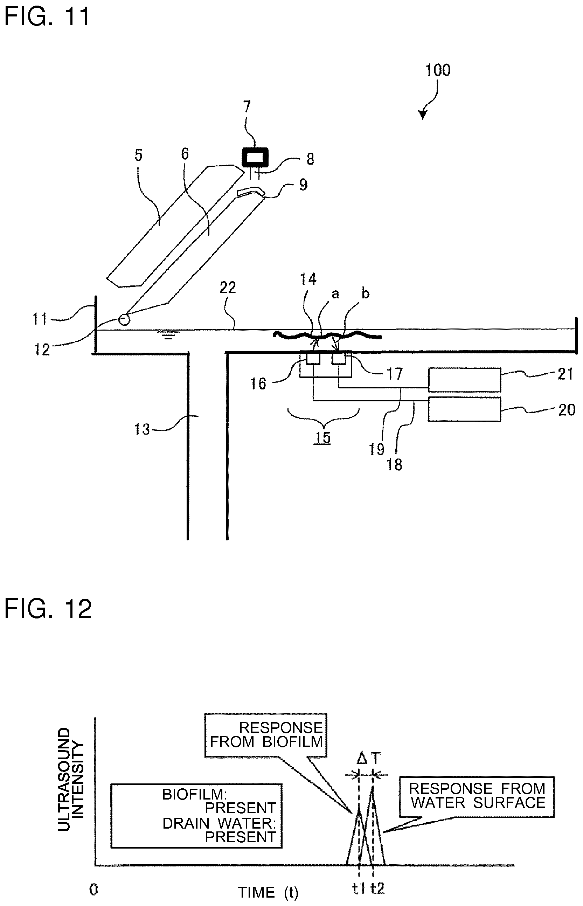

Fig. 11 is a schematic diagram of the air-conditioning apparatus 100 according to Embodiment 1 with the biofilm 14 formed and the drain water 22 pooled in the drain pan 11. As illustrated in Fig. 11, in the case illustrated in Fig. 5 in which humidifying operation or cooling operation is performed, as the drain water 22 rises in level, the biofilm 14 that has formed above the drain pan 11 becomes submerged in the drain water 22. If an ultrasonic wave is transmitted from the ultrasound transmitter 16 in this state, the ultrasonic wave propagates in the drain water 22 in the direction of an arrow "a". Upon reaching the biofilm 14, a portion of the ultrasonic wave is reflected back at the interface between the drain water 22 and the biofilm 14 to propagate in the direction of an arrow "b", and the reflected ultrasonic wave is detected by the ultrasound detector 17 as a response. Another portion of the ultrasonic wave reaching the biofilm 14 passes through the interface between the drain water 22 and the biofilm 14 without being reflected, and propagates to the surface of the drain water 22. Upon reaching the surface of the drain water 22, the ultrasonic wave is reflected at the interface between the drain water 22 and air, and the reflected ultrasonic wave is detected at the ultrasound detector 17 as a response.

Fig. 12 is a graph illustrating ultrasound response in the state illustrated in Fig. 11 with the biofilm 14 formed and the drain water 22 pooled in the drain pan 11. As illustrated in Fig. 12, when an ultrasonic wave is transmitted from the ultrasound transmitter 16 at time t = 0, the first peak value is detected by the ultrasound detector 17 when time t = t1 elapses. The second peak value is detected at an elapsed time t = t2, which is $\Delta$t later than time t = t1. The first peak value detected by the ultrasound detector 17 is due to the ultrasonic wave reflected at the interface between the drain water 22 and the biofilm 14 at time t = t1. The second peak value is due to the ultrasonic wave reflected at the interface between the surface of the drain water 22 and air at time t = t2.

The time t = t1 and the time t = t2 are each determined by the distance from the ultrasound transmitter 16 to the interface. If there is a large difference between the distance from the ultrasound transmitter 16 to the biofilm 14, and the distance from the ultrasound transmitter 16 to the surface of the drain water 22, the two peak values appear at time t = t1 and time t = t2 corresponding to the above-mentioned respective distances. In this case, one of the two peak values can be assumed to be due to the biofilm 14. By contrast, if there is not much difference between the two distances, the two peak values appear close to each other, and thus become indistinguishable from each other. This makes it impossible to determine whether the biofilm 14 is present.

As described above, when detection of the biofilm 14 is performed with the drain water 22 pooled in the drain pan 11, there are a plurality of interfaces being present along the path of ultrasound propagation. If the ultrasound detector 17 receives an ultrasonic wave in this case, it is not possible to determine whether the received ultrasonic wave represents a reflection from the surface of the drain water 22 or a reflection from the biofilm 14. This makes it impossible to determine the presence or absence of the biofilm 14 in accordance with whether a response is received by the ultrasound detector 17. Consequently, it is not possible to inform the user whether the biofilm 14 is present.

Determination of whether the biofilm 14 has built up may be made by setting a predetermined threshold, and determining whether the threshold is exceeded. For example, let P0 represent the ultrasound intensity when neither the biofilm 14 nor the drain water 22 is present, and let P1 represent the ultrasound intensity measured after the end of humidifying operation or cooling/heating operation. If their difference, P0 - P1, exceeds a predetermined value, that is, a predetermined threshold, then this can be determined as indicating the presence of the biofilm 14 that has built up.

Although the above description is directed to a case in which measurement is performed at the time when a predetermined period of time elapses from the end of humidifying operation or cooling operation and the draining is regarded as complete, it is possible to use any other methods capable of eliminating any potential interference with the measurement due to the surface of the drain water 22. For example, the same effect as mentioned above can be attained by placing a heater near the ultrasound detector 17, performing heating when humidifying operation or cooling operation ends to thereby evaporate the drain water 22, and then measuring the biofilm 14 in that state.

With the air-conditioning apparatus 100 according to Embodiment 1 described above, if it is determined that the drain water 22 has been sufficiently drained, that is, if it is determined that drainage is complete, the detection unit 15 causes an ultrasonic wave to be transmitted from the ultrasound transmitter 16. Then, it is detected whether the ultrasound detector 17 receives a response, and the presence or absence of the biofilm 14 is determined based on the detection result. This configuration prevents an ultrasonic wave reflected by an object other than the biofilm 14, such as the surface of the water in the drain pan 11, from being misidentified as a response due to the biofilm. Consequently, it is possible to output an alert to the user based on the detected ultrasonic wave, thus facilitating the determination of whether a biofilm is present.

With the air-conditioning apparatus 100 according to Embodiment 1, draining of the drain pan 11 completes when a predetermined period of time elapses after the end of cooling operation or humidifying operation. The detection of the biofilm 14 is performed after the elapse of the predetermined period of time. Consequently, the detection of the biofilm 14 can be performed in a state in which the drain water 22 is completely drained out.

With the air-conditioning apparatus 100 according to Embodiment 1, the detection unit 15 includes the ultrasound transmitter 16 to transmit an ultrasonic wave, and the ultrasound detector 17 to detect the ultrasonic wave transmitted from the ultrasound transmitter. Since the ultrasound transmitter 16 transmits an ultrasonic wave in a state in which draining of water is complete, the ultrasonic wave detected by the ultrasound detector 17 can be determined to be an ultrasonic wave reflected from the biofilm 14.

With the air-conditioning apparatus 100 according to Embodiment 1, the detection unit 15 is provided below the drain pan 11. This helps prevent false detection caused by a response from an object other than the drain pan 11.

With the air-conditioning apparatus 100 according to Embodiment 1, the ultrasound detector 17 detects the ultrasonic wave reflected from the biofilm 14. This configuration allows the ultrasound transmitter 16 and the ultrasound detector 17 to be arranged adjacent to each other and integrated together.

Embodiment 2

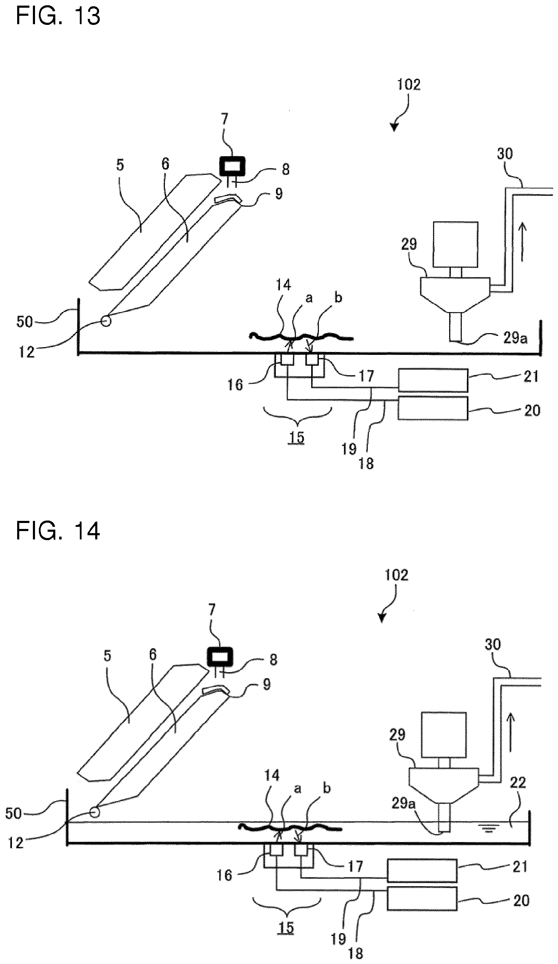

Fig. 13 is a schematic diagram illustrating, in cross-section, a portion of an air-conditioning apparatus 102 according to Embodiment 2 in the vicinity of a drain pan 50. As illustrated in Fig. 13, the drain pan 50 according to Embodiment 2 differs from Embodiment 1 in that a drain pump 29 and a drain pipe 30 are provided to the drain pan 50. The drain pan 50 is used for, for example, places where it is difficult to drain out water naturally by gravity via the waste pipe 13 in the same manner as in Embodiment 1. Other features of the configuration according to Embodiment 2 are the same as Embodiment 1, and thus will not be described in further detail.

<Configuration in Vicinity of Drain Pan 50>

The drain pump 29 is, for example, an electric pump with propeller. The drain pump 29 is disposed above the drain pan 50 to suck up the drain water 22 in the drain pan 50 from a suction port 29a. The drain pipe 30 is connected to the drain pump 29 to drain, to the outside, the drain water 22 sucked up by the drain pump 29. The drain pump 29 and the drain pipe 30 each represent another example of a draining unit according to the present invention. The drain water 22 pooled in the drain pan 50 is forcibly sucked up by the driving force of the drain pump 29, and drained to the outside through the drain pipe 30.

<Operation of Air-Conditioning Apparatus 102>

As with Embodiment 1, according to Embodiment 2, when the air-conditioning apparatus 102 performs humidifying operation or cooling operation, the water droplet 12 leaking out from the humidifying material 6 without being used for humidification, or condensation water produced in the vicinity of the heat exchanger 5 is received by the drain pan 50 as the drain water 22. The drain water 22 is sucked up as the drain pump 29 operates, and is drained through the drain pipe 30 without accumulating in the drain pan 50. This keeps the drain pan 50 in a drained state with the drain water 22 being at a level lower than the suction port 29a.

<Detection of Biofilm 14>

While humidifying operation or cooling operation is performed, the drain pump 29 operates to keep the drain pan 50 drained as illustrated in Fig. 13. At this time, the detection unit 15 causes the piezoelectric element 23 inside the ultrasound transmitter 16 to vibrate, thus generating an ultrasonic pulse wave with a wavelength of 300 kHz. The ultrasonic wave propagates in air in the direction of an arrow "a", and upon reaching the biofilm 14, the ultrasonic wave is reflected at the interface between the biofilm 14 and air. The ultrasonic wave propagates in the direction of an arrow "b", and passes into the ultrasound detector 17. The ultrasonic wave then causes the piezoelectric element 23 to vibrate to produce a voltage between the electrode 25 and the electrode 26. The voltage is detected by the amplifier/detector circuit 21 as a response from the biofilm 14. Upon detecting a response, the detection unit 15 determines that the biofilm 14 is present, and provides an alert indicating to clean the drain pan 50.

Fig. 14 is a schematic diagram illustrating, in cross-section, a portion of the air-conditioning apparatus 102 according to Embodiment 2 in the vicinity of the drain pan 50 with humidifying operation or cooling/heating operation ended and power supply stopped. As illustrated in Fig. 14, at nighttime or other times when humidifying operation or cooling/heating operation is ended, and the power supply is stopped, the drain pump 29 is also turned off. The drain water 22 depositing in the drain pump 29 or the drain pipe 30 drops to the drain pan 50 due to gravity, and the biofilm 14 becomes submerged in the drain water 22. Transmitting an ultrasonic wave from the ultrasound transmitter 16 in this state would cause two peak values to be detected at the ultrasound detector 17, making it impossible to detect whether the biofilm 14 is present. However, the detection unit 15 does not operate while the power supply to the air-conditioning apparatus 102 is stopped. Once the air-conditioning apparatus 102 becomes active, then the driving of the drain pump 29 is started, and draining of the drain water 22 is resumed so that the drain pan 50 becomes drained, thus making it possible for the detection unit 15 to detect the biofilm 14.

The drain pan 50 does not become drained immediately after activation of the drain pump 29, but there is a time difference between the two events. That is, the drain pan 50 is initially in a submerged state with the biofilm 14 immersed in the drain water 22. Then, the water level lowers as time passes, causing the biofilm 14 to become exposed into air. Consequently, in the case of performing drainage by operating the drain pump 29 as well, it is possible to keep track of changes in water content per unit area as illustrated in Fig. 8 according to Embodiment 1. As with Embodiment 1, in detecting the biofilm 14, it is preferred to perform the detection of the biofilm 14 after the elapse of a predetermined period of time, that is, after a steady state is reached, as this makes it possible to exclude the influence of the interface of the drain water 22.

The air-conditioning apparatus 102 according to Embodiment 2 described above includes the drain pump 29 disposed above the drain pan 50 to suck up water, and the drain pipe 30 to drain out water. This configuration ensures that the biofilm 14 is not submerged in the drain water 22 during humidifying operation or cooling/heating operation, thus allowing the presence or absence of the biofilm 14 to be detected without being misidentified as a detection result due to the surface of the drain water 22.

Embodiment 3

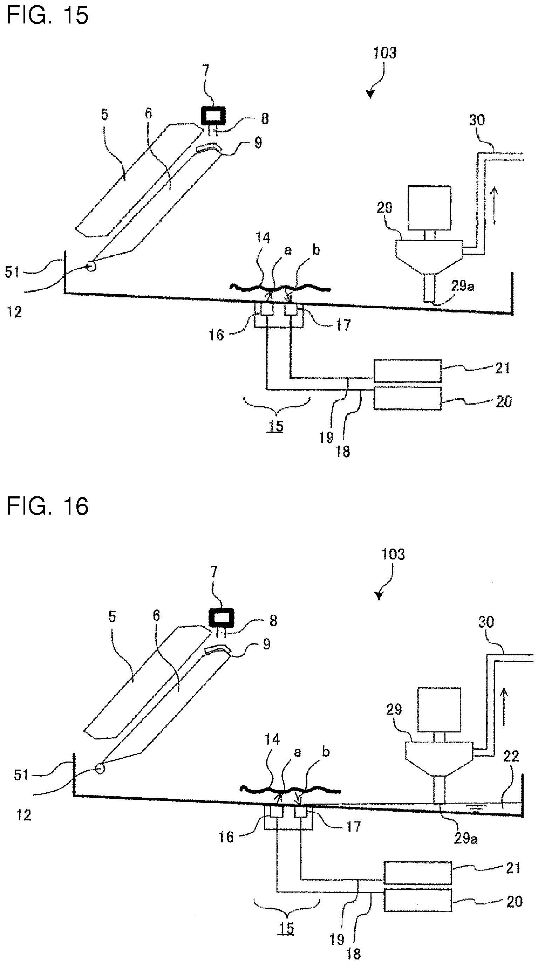

Fig. 15 is a schematic diagram illustrating, in cross-section, a portion of an air-conditioning apparatus 103 according to Embodiment 3 in the vicinity of a drain pan 51. As illustrated in Fig. 15, Embodiment 3 differs from Embodiments 1 and 2 in that the bottom surface of the drain pan 51 has a region that is sloped with respect to the horizontal plane with the lowest point being the position directly below the drain pump 29 disposed above the drain pan 51. Other features of Embodiment 3 are the same as Embodiments 1 and 2 and thus will not be described in further detail.

<Configuration in Vicinity of Drain Pan 51>

The drain pan 51 is provided with the detection unit 15 disposed on the underside of the drain pan 51, the drain pump 29 disposed above the drain pan 51, and a sloped bottom surface. The horizontal level of the suction port 29a of the drain pump 29 is lower than the horizontal level of the ultrasound detector 17 of the detection unit 15.

<Operation of Air-Conditioning Apparatus 103>

Fig. 16 is a schematic diagram illustrating, in cross-section, a portion of the air-conditioning apparatus 103 according to Embodiment 3 in the vicinity of the drain pan 51 during humidifying operation or cooling operation. When humidifying operation or cooling operation is performed, the drain pan 50 receives, as the drain water 22, the water droplet 12 leaking out from the humidifying material 6 without being used for humidification, or condensation water produced in the vicinity of the heat exchanger 5. When the drain water 22 gradually rising in level reaches the suction port 29a of the drain pump 29, the drain water 22 is sucked up by the drain pump 29 for discharge via the drain pipe 30. This keeps the surface of the drain water 22 at the same level as the suction port 29a.

<Detection of Biofilm 14>

During humidifying operation or cooling operation, the slope of the drain pan 51 ensures that the drain water 22 is removed away from the portion of the drain pan 51 over the detection unit 15. The detection unit 15 transmits an ultrasonic pulse wave from the ultrasound transmitter 16, and detects the presence of any response representing an ultrasonic wave that has reached and reflected off the biofilm 14. If the detection unit 15 detects a response, that is, if a threshold is exceeded, the detection unit 15 determines that the biofilm 14 is present, and provides an alert indicating to clean the drain pan 51.

As described above, the portion of the drain pan 51 immediately below the suction port 29a of the drain pump 29, and the portion of the drain pan 51 that lies over the detection unit 15 are positioned at the same height. This configuration ensures that the drain water 22 over the detection unit 15 is completely drained out by the drain pump 29. As a result, the drain water 22 does not accumulate over the detection unit 15. This makes it possible to detect the presence or absence of the biofilm 14 by use of ultrasound, without the influence of the surface of the drain water 22.

Although the foregoing description is directed to a case in which the drain pan 51 is sloped in one direction at the same angle, the drain pan 51 may be sloped in a plurality of directions and at a plurality of angles as long as the height of the drain pan 51 is lowest in the region directly below the suction port 29a of the drain pump 29.

With the air-conditioning apparatus 103 according to Embodiment 3 described above, the drain pan 51 has a region that is sloped with respect to the horizontal plane. As a result, it is possible to align the height of the portion of the drain pan 51 immediately below the suction port 29a of the drain pump 29 with the height of the portion of the drain pan 51 lying over the detection unit 15. This helps increase the amount of the drain water 22 over the detection unit 15 that can be drained out by the drain pump 29.

Embodiment 4

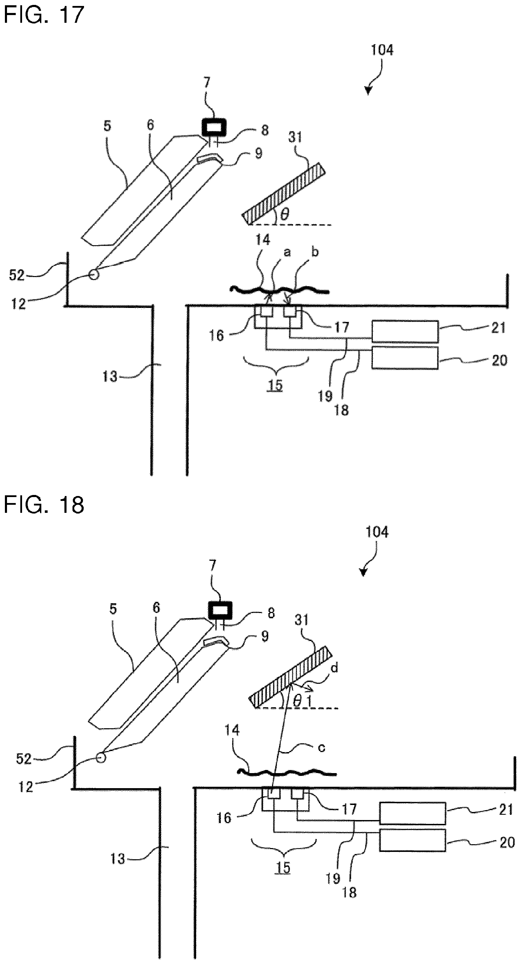

Fig. 17 is a schematic diagram illustrating, in cross-section, a portion of an air-conditioning apparatus 104 according to Embodiment 4 in the vicinity of a drain pan 52. As illustrated in Fig. 17, Embodiment 4 differs from Embodiments 1 to 3 in the presence of a scattering plate 31 disposed above the drain pan 52. Other features of Embodiment 4 are the same as Embodiments 1 and 3 and thus will not be described in further detail.

The scattering plate 31 is tilted at an angle $\theta$ with respect to the horizontal plane. The scattering plate 31 represents an example of a reflecting plate according to the present invention. The angle $\theta$, which depends on the directivity of the ultrasound transmitter 16, is preferably greater than or equal to 30 degrees. The scattering plate 31 is preferably made of a material having sound absorbability. Suitable examples of such a material include urethane-based or styrene-based foams. Alternatively, with the angle $\theta$ set at zero degrees, the scattering plate 31 may be made of a sound-absorbing material with no reflectivity, for example, rock wool or glass wool. The detection unit 15 may be placed at an angle such that the direction in which the ultrasound transmitter 16 transmits an ultrasonic wave or the ultrasound detector 17 receives an ultrasonic wave is not perpendicular.

<Detection of Biofilm 14>

Fig. 18 schematically illustrates operation of the detection unit 15 of the air-conditioning apparatus 104 according to Embodiment 4. As illustrated in Fig. 18, a portion of the ultrasonic wave transmitted from the ultrasound transmitter 16 passes through the biofilm 14 and travels in the direction of an arrow "c". This ultrasonic wave is then reflected by the scattering plate 31 to travel in the direction of an arrow "d". The ultrasonic wave having passed through the biofilm 14 and reflected off an object other than the biofilm 14 is thus prevented from reaching the ultrasound detector 17. This minimizes intrusion of noise that interferes with the measurement performed by the ultrasound detector 17, thus allowing for more accurate measurement.

Desirably, the ultrasonic wave used has high frequency. Generally, an ultrasonic wave with higher frequency exhibits higher directivity. Transmitting an ultrasonic wave with low directivity introduces the possibility that the ultrasonic wave having passed through the biofilm 14 is reflected at a location other than the scattering plate 31, and the reflection is detected by the ultrasound detector 17. By contrast, transmitting an ultrasonic wave with high directivity from the ultrasound transmitter 16 ensures that the ultrasonic wave having passed through the biofilm 14 is reflected by the scattering plate 31, and only the ultrasonic wave reflected from the biofilm 14 is detected by the ultrasound detector 17.

Although the foregoing description is directed to an exemplary configuration in which water is drained by the waste pipe 13 connected to the drain pan 52, it is also possible to apply Embodiment 4 to the configuration according to Embodiment 2 or 3 in which the drain pump 29 and the drain pipe 30 are disposed above the drain pan 52.

The air-conditioning apparatus 104 according to Embodiment 4 described above includes the scattering plate 31 disposed above the detector. This configuration ensures that the ultrasonic wave having passed through the biofilm 14 is reflected by the scattering plate 31 to propagate in a direction other than toward the ultrasound detector 17. This prevents noise from mixing into a response detected by the ultrasound detector 17, thus enabling higher accuracy measurement.

Embodiment 5

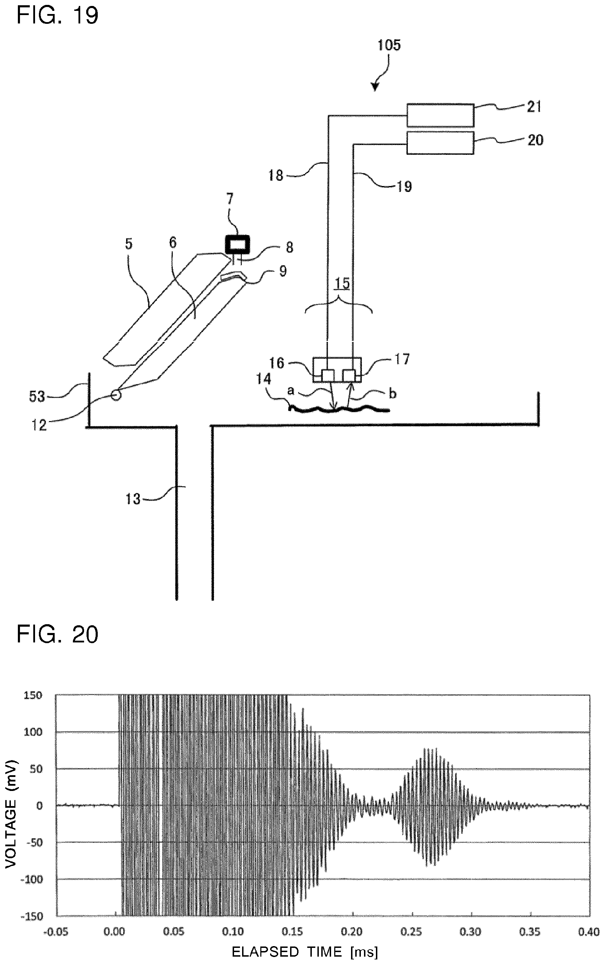

Fig. 19 is a schematic diagram illustrating, in cross-section, a portion of an air-conditioning apparatus 105 according to Embodiment 5 in the vicinity of a drain pan 53. As illustrated in Fig. 19, Embodiment 5 differs from Embodiments 1 to 4 in that the detection unit 15 is disposed above the drain pan 53, with an airspace present between the drain pan 53 and the detection unit 15. Other features of Embodiment 5 are the same as Embodiments 1 to 4 and thus will not be described in further detail.

<Configuration of Detection Unit 15>

The detection unit 15 is disposed such that the ultrasound transmitter 16 and the ultrasound detector 17 are opposed to the bottom surface of the drain pan 53. The ultrasound transmitter 16 transmits an ultrasonic wave toward the bottom surface of the drain pan 53, and the ultrasound detector 17 detects an ultrasonic wave arriving from the drain pan 53.

<Detection of Biofilm 14>

The detection unit 15 causes the ultrasound transmitter 16 to transmit an ultrasonic wave, when a predetermined period of time elapses after the end of humidifying operation or cooling operation of the air-conditioning apparatus 105 and the draining of the drain water 22 through the waste pipe 13 connected to the drain pan 53 becomes complete. The ultrasonic wave is reflected by the biofilm 14 that exists in the direction in which the ultrasonic wave is transmitted. The reflected ultrasonic wave reaches the ultrasound detector 17, and is detected as a response. If the ultrasound detector 17 detects a peak response due to the ultrasonic wave reflected from the biofilm 14, the detection unit 15 provides an alert to indicate the presence of the biofilm 14.

<Experimental Results>

The following describes exemplary cases according to Embodiment 5 in which whether there is a build-up of the biofilm 14 is determined based on the results of an experiment. In the experiment, ultrasound intensity was measured by the detection unit 15 of the air-conditioning apparatus 105 illustrated in Fig. 19. The ultrasound transmitter 16 and the ultrasound detector 17 were placed at a distance of 35 mm to the bottom surface of the drain pan 53.

<Measurement of Ultrasound Intensity P0>

Fig. 20, which represents experimental results obtained with the air-conditioning apparatus 105 according to Embodiment 5 in its initial state, is a graph illustrating the relationship between voltage and elapsed time following transmission of an ultrasonic wave from the ultrasound transmitter 16. The voltage represents the voltage detected by the amplifier/detector circuit 21, and the elapsed time represents the time elapsed after an ultrasonic wave is transmitted at an elapsed time of 0 ms. In Fig. 20, the changes in voltage within the elapsed time range from 0.23 to 0.32 ms correspond to the ultrasonic wave reflected from the drain pan 53. The changes in voltage up to an elapsed time of 0.2 ms are due to the resonance phenomenon of the detection unit 15.

As illustrated in Fig. 20, in the initial state with no biofilm 14 present, the voltage readings within the elapsed time range from 0.23 to 0.32 ms oscillate between positive and negative values. It was thus impossible to directly calculate ultrasound intensity from this data. Accordingly, the voltage values within the elapsed time range from 0.23 to 0.32 ms were squared and then time-integrated to obtain an ultrasound intensity P0. The unit of the ultrasound intensity P0 is $(mV)^2*ms$.

<Measurement of Ultrasound Intensity P1>

Subsequently, the cycle of continuously performing humidifying operation for six hours followed by stopping the humidifying operation for 18 hours was repeated for 60 days to allow the biofilm 14 to form on the bottom surface of the drain pan 53. The amount of biofilm deposition at this time, as measured by the measurement method described above with reference to Embodiment 1, was 4.8 mg/cm$^2$. Subsequently, the humidifying operation was performed continuously for six hours to make the biofilm 14 become submerged in the drain water 22 without being exposed to the airspace.

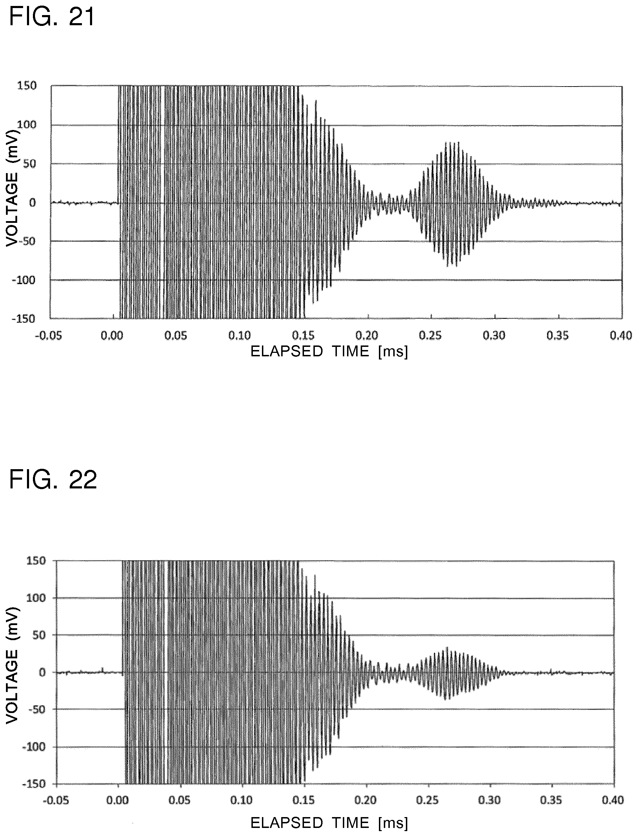

Fig. 21 illustrates experimental results obtained before draining of the air-conditioning apparatus 105 according to Embodiment 5. Immediately after the stopping of humidifying operation, that is, at the zeroth minute after the stopping of humidifying operation, the air-conditioning apparatus 105 is in a pre-drained state with the biofilm 14 not exposed to the airspace. Fig. 21 illustrates the relationship between voltage and elapsed time for a case in which an ultrasonic wave is transmitted from the ultrasound transmitter 16 in this state. As illustrated in Fig. 21, for the pre-drainage state, changes in the voltage of the amplifier/detector circuit 21 were examined within the elapsed time range from 0.23 to 0.32 ms as with Fig. 20. No decrease in absolute voltage value was observed from comparison with Fig. 20. This is due to the influence of the drain water 22. Consequently, it was not possible to determine the presence of a build-up of the biofilm 14.

Fig. 22 illustrates experimental results obtained after draining of the air-conditioning apparatus 105 according to Embodiment 5. Fig. 22 illustrates the relationship between voltage and elapsed time for a case in which an ultrasonic wave is transmitted from the ultrasound transmitter 16 at an elapsed time of 20 minutes after the stopping of humidifying operation, that is, after the drain pan 53 is confirmed to have been drained. As illustrated in Fig. 22, even at an elapsed time of 20 minutes after the end of humidifying operation, changes in the voltage of the amplifier/detector circuit 21 were observed within the elapsed time range from 0.23 to 0.32 ms as with Fig. 20. However, decreases in absolute voltage value were observed in comparison to Fig. 20, which allowed the ultrasonic wave scattered by the biofilm 14 to be determined without the influence of the drain water 22. Accordingly, the voltage changes within the elapsed time range from 0.23 to 0.32 ms were squared and then time-integrated to obtain an ultrasound intensity P.

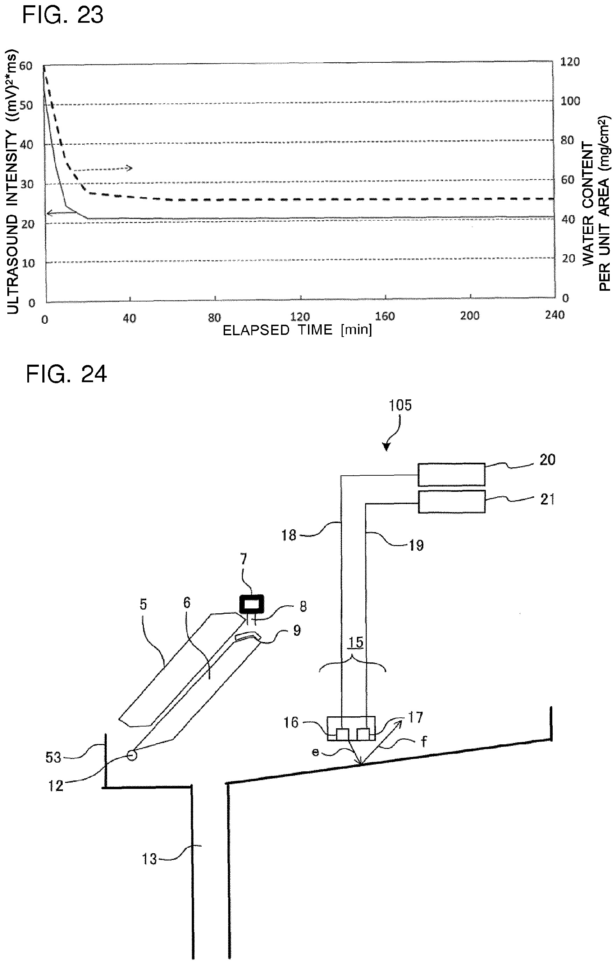

Fig. 23 illustrates how the ultrasound intensity P and water content per unit area change with time. In Fig. 23, ultrasound intensity is indicated by a solid line, and water content per unit area is indicated by a dashed line. In this case, an elapsed time of zero minutes represents the point in time when humidifying operation ends, and elapsed time represents the time elapsed after the end of humidifying operation. The method used to calculate water content per unit area is the same as the method described above with reference to Embodiment 1.

As illustrated in Fig. 23, at an elapsed time of zero minutes immediately after the stopping of humidifying operation, the ultrasound intensity was 54 $(mV)^2*ms$, which gradually decreased as drainage progressed with time, reaching 21.1 $(mV)^2*ms$ at an elapsed time of 20 minutes after the stopping of humidifying operation. Thereafter, the ultrasound intensity remained substantially constant at 21 $(mV)^2*ms$. The water content per unit area exhibited a tendency similar to ultrasound intensity, such that after dropping to 55 mg/cm$^2$ at an elapsed time of 20 minutes after the stopping of humidifying operation, the water content per unit area remained constant at 55 mg/cm$^2$.

These experimental results indicate that it is appropriate to regard the drainage as complete at and after the time when 20 minutes elapse following the stopping of humidifying operation, and determine the ultrasound intensity measured within this time region as a value indicative of ultrasound intensity P1 obtained after the end of humidifying operation or cooling/heating operation. The time at which the drainage becomes complete refers to the time at which the water content per unit area can be regarded as constant, which is defined in this case as the time at which the water content per unit area has decreased at a rate less than or equal to 5% in 10 minutes.

<Comparison between Difference and Threshold Ps>

Subsequently, the difference between the ultrasound intensity P0 with no biofilm 14 present, and the ultrasound intensity P1 obtained after the end of humidifying operation was determined, and compared with a threshold Ps. From Fig. 20, the ultrasound intensity P0 with no biofilm 14 present, that is, the initial value of ultrasound intensity was determined to be 54 $(mV)^2*ms$. From Fig. 22, the ultrasound intensity P1 after humidifying operation, that is, the ultrasound intensity P1 at an elapsed time of 20 minutes after the stopping of humidifying operation was determined to be 21.1

$(mV)^2*ms$.

The threshold Ps was set to an ultrasound intensity of 30 $(mV)^2*ms$. In this regard, the threshold Ps corresponds to how much deposition of the biofilm 14 is allowed. Since the threshold Ps varies with the allowable amount of biofilm deposition, the ultrasound intensity corresponding to the amount of the biofilm 14 actually measured was determined in advance. Then, a correlation equation between the amount of the biofilm 14 allowed, and ultrasound intensity was used to set the threshold. The measured amount of the biofilm 14 ranged from 1 to 10 mg/cm$^2$.

Through the above-mentioned procedure, the difference between the ultrasound intensity P0 with no biofilm 14 present, and the ultrasound intensity P1 obtained after the end of humidifying operation is compared against the threshold Ps, and if the difference is greater than the threshold Ps, this is determined as indicating the presence and deposition of the biofilm 14.

<Modification 1>

Fig. 24 is a schematic diagram illustrating a portion of the air-conditioning apparatus 105 according to a modification of Embodiment 5 in the vicinity of the drain pan 53. As illustrated in Fig. 24, according to Modification 1, a portion of the bottom surface of the drain pan 53 is sloped in a direction not opposed to the detection unit 15. An ultrasonic wave transmitted from the detection unit 15 travels in the direction of an arrow "e", and is reflected by the drain pan 53 such that the reflected wave travels not toward the ultrasound detector 17 but in the direction of an arrow "f". This configuration ensures that an ultrasonic wave reflected from the biofilm 14 that is present between the detection unit 15 and the drain pan 53 reaches the ultrasound detector 17, whereas an ultrasonic wave reflected from the drain pan 53 is excluded.

As described above, if an ultrasonic wave is transmitted toward the bottom surface of the drain pan 53, a reflection from the bottom surface of the drain pan 53 is also detected. If the drain pan 53 is sloped in this case as in Modification 1, the influence of this reflected ultrasonic wave can be excluded. In the same manner as with the sloped configuration of the drain pan 53, the ultrasound transmitter 16 or the ultrasound detector 17 may be placed at an angle with respect to the perpendicular direction such that an ultrasonic wave is not transmitted or received perpendicularly. In another possible configuration, the area of the drain pan 53 to be applied with ultrasound radiation is made of a sound-absorbing material, thus reducing the amount of ultrasonic wave reflected from the area of the drain pan 53 where the sound-absorbing material is present.

Although the foregoing description is directed to an exemplary configuration in which the drain water 22 is drained out through the waste pipe 13 connected to the drain pan 53, it is also possible to apply the above-mentioned configuration to a configuration in which the drain pump 29 and the drain pipe 30 are disposed above the drain pan 53.

With the air-conditioning apparatus 105 according to Embodiment 5 described above, the detection unit 15 is disposed above the drain pan 53. This configuration makes it possible to detect the biofilm 14 without the influence of the surface of the drain water 22, and also allows for increased freedom in the placement of the detection unit 15.

Embodiment 6

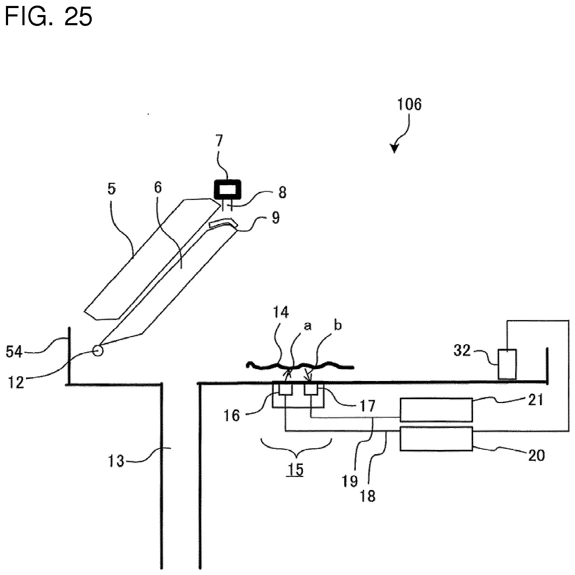

Fig. 25 is a schematic diagram illustrating, in cross-section, a portion of an air-conditioning apparatus 106 according to Embodiment 6 in the vicinity of a drain pan 54. As illustrated in Fig. 25, Embodiment 6 differs from Embodiments 1 to 5 in the presence of a water level sensor 32 disposed on the top of the bottom surface of the drain pan 54. Other features of Embodiment 6 are the same as Embodiments 1 to 5 and thus will not be described in further detail. The water level sensor 32 is connected to the power supply 20 via the electric wire 18 to constantly monitor the level of the drain water 22 pooled in the drain pan 54. When the water level sensor 32 detects that the water level has become lower than or equal to a predetermined value close to zero, the detection unit 15 regards that draining of the drain water 22 is finished, and starts detection. The water level sensor 32 to be used may be, for example, a device using a float switch system.

<Detection of Biofilm 14>

When the air-conditioning apparatus 106 finishes its humidifying operation or cooling operation, supply of the water droplet 12 is stopped, and the drain water 22 is drained from the drain pan 54. When the detection unit 15 is notified from the water level sensor 32 that the water level has become lower than or equal to a predetermined value close to zero, the detection unit 15 starts detection of the biofilm 14. The detection unit 15 transmits an ultrasonic wave from the ultrasound transmitter 16 in the direction of an arrow "a". The ultrasonic wave is reflected by the biofilm 14 in the direction of an arrow "b". The reflected ultrasonic wave then reaches the ultrasound detector 17 and causes the piezoelectric element 23 to vibrate. This vibration generates a voltage, which is detected as a response by the amplifier/detector circuit 21. The detection unit 15 thus determines that the biofilm 14 is present, and provides an alert.

Although the above description is directed to an exemplary case in which a device using a float switch system is used as the water level sensor 32, other devices may be used, such as devices using an ultrasonic reflection system or infrared reflection system. Further, the water level sensor 32 may be disposed at any location on the top of the bottom surface of the drain pan 53. Furthermore, the drain water 22 may be drained by using the drain pump 29 and the drain pipe 30 that are disposed above the drain pan 52.

With the air-conditioning apparatus 106 according to Embodiment 6 described above, the water level sensor 32 is disposed on the top of the drain pan 53, and draining of the drain water 22 is detected as complete when the level of the drain water 22 is zero or approximately equal to zero. The detection unit 15 starts the detection of the biofilm 14 based on the detection result from the water level sensor 32, thus making it possible to detect the biofilm 14 without the influence of the surface of the drain water 22.

Embodiment 7

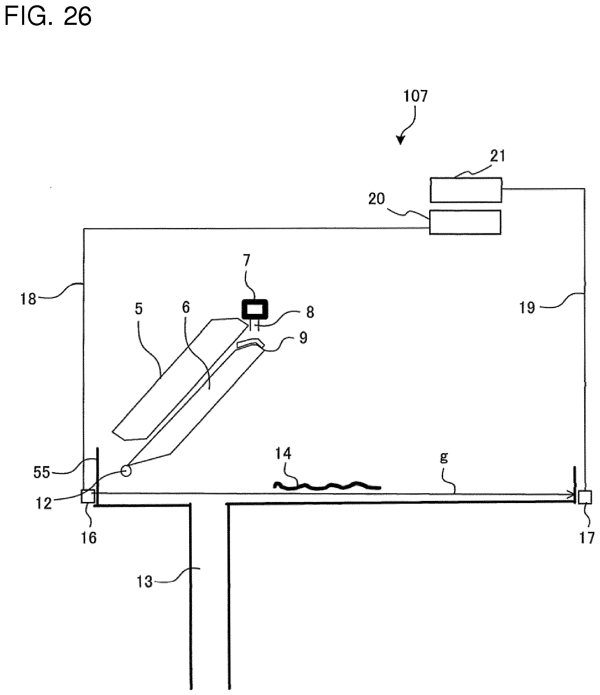

Fig. 26 is a schematic diagram illustrating, in cross-section, a portion of an air-conditioning apparatus 107 according to Embodiment 7 in the vicinity of a drain pan 55. As illustrated in Fig. 26, Embodiment 7 differs from Embodiments 1 to 6 in that for the drain pan 55, the ultrasound transmitter 16 and the ultrasound detector 17 are provided separately to the opposite lateral sides of the drain pan 55. Other features of Embodiment 7 are the same as Embodiments 1 to 6 and thus will not be described in further detail.

<Configuration in Vicinity of Drain Pan 55>

The ultrasound transmitter 16 is provided to the outside of one side plate of the drain pan 55, and the ultrasound detector 17 is provided to the outside of the other side plate of the drain pan 55 in an opposed relation to the ultrasound transmitter 16. The ultrasound transmitter 16 and the ultrasound detector 17 are separate and not integrated with each other. The ultrasound transmitter 16 transmits an ultrasonic wave toward the ultrasound detector 17, that is, in the direction of an arrow "g". The waste pipe 13 is connected to the drain pan 55 to drain out the drain water 22.

<Detection of Biofilm 14>

When a predetermined period of time elapses after the end of humidifying operation or cooling operation of the air-conditioning apparatus 105, draining of the drain water 22 from the drain pan 53 is complete. In this state, the detection unit 15 causes the piezoelectric element 23 of the ultrasound transmitter 16 to vibrate and generate an ultrasonic wave. In the absence of any object between the ultrasound transmitter 16 and the ultrasound detector 17, that is, in the absence of the biofilm 14, the ultrasonic wave propagates in air, and substantially all of the propagating ultrasonic wave reaches the ultrasound detector 17, where the ultrasonic wave is detected as a response. If the biofilm 14 is present above the drain pan 55, a portion of the ultrasonic wave being transmitted undergoes reflection/scattering at the biofilm 14, and another portion of the ultrasonic wave passes through the biofilm 14 and is then detected as a response upon reaching the ultrasound detector 17. The response detected by the ultrasound detector 17 at this time represents an ultrasonic wave that has undergone reflection/scattering, and thus exhibits decreased intensity in comparison to the ultrasonic wave being transmitted. Accordingly, for example, if the response falls below a predetermined threshold, the detection unit 15 provides an alert to indicate that the biofilm 14 is present within the drain pan 55.

Although the foregoing description is directed to an exemplary configuration in which the drain water 22 is drained out through the waste pipe 13 connected to the drain pan 55, it is also possible to employ a configuration that includes the drain pump 29 and the drain pipe 30. In this case, the drain pump 29 and the drain pipe 30 are positioned not to block the path of ultrasonic wave propagation.

With the air-conditioning apparatus 107 according to Embodiment 7 described above, the ultrasound detector 17 detects a portion of the ultrasonic wave transmitted from the ultrasound transmitter 16 that has passed through the biofilm 14. This configuration makes it possible to determine the presence or absence of the biofilm 14 based on the intensity of the ultrasonic wave transmitted from the ultrasound transmitter 16 and reaching the ultrasound detector 17. This helps reduce the influence of the surface of the drain water 22 on the detection result.

Example

This example does not form part of the invention.

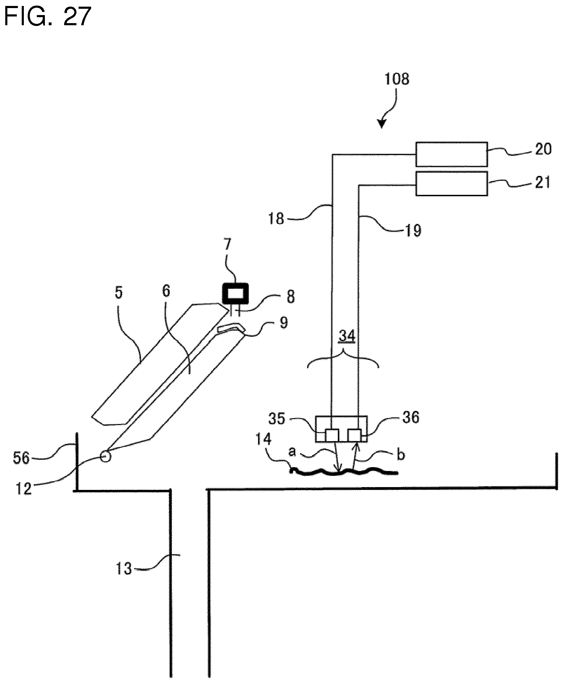

Fig. 27 is a schematic diagram illustrating, in cross-section, a portion of an air-conditioning apparatus 108 according to an example in the vicinity of a drain pan 56. As illustrated in Fig. 27, this arrangement differs from Embodiments 1 to 7 in that an optical detection unit 34 including an LED 35 and a photodiode 36 is provided to the drain pan 56. Other features are the same as Embodiments 1 to 7 and thus will not be described in further detail. The term LED is an abbreviation of light emitting diode.

As described above with reference to Embodiment 1, the biofilm 14 is a sticky aggregate formed by conglomeration of bacteria, molds, or other microorganisms, adherent polysaccharides metabolized by such microorganisms, and airborne contaminants. The biofilm 14 or other objects produced by metabolism are known to contain substances that exhibit fluorescence. Examples of such substances include riboflavin, tryptophan, and nicotinamide adenine dinucleotide that is abbreviated as NADH. These substances have the property of emitting fluorescent light when irradiated with light of 300 to 450 nm, that is, excitation light. This is a property not observed with non-microbial organisms.

The optical detection unit 34, which takes note the fluorescent characteristics of riboflavin contained in the biofilm 14, detects the presence or absence of the biofilm 14 based on whether fluorescent light is detected in response to application of excitation light. Specifically, excitation light with a center wavelength of 360 nm with riboflavin excitation wavelength of 365 nm and fluorescent wavelength of 445 nm is applied.

<Configuration in Vicinity of Drain Pan 56>

The optical detection unit 34 is disposed above the drain pan 56. The optical detection unit 34 includes the LED 35 connected to the power supply 20 by the electric wire 18, and the photodiode 36 connected to the amplifier/detector circuit 21 by the electric wire 19. The LED 35 generates light with a wavelength of 360 nm, and the photodiode 36 detects fluorescent light emitted by the biofilm 14 in response to the excitation light emitted from the LED 35. As the LED 35, an LED that emits light with a center wavelength of 360 nm is used. Desirably, the photodiode 36 has a built-in filter that removes wavelengths of light near 360 nm to exclude the influence of noise due to the light with the wavelength of 360 nm emitted by the LED 35.

<Detection of Biofilm 14>

When the drain water 22 pooled in the drain pan 56 during humidifying operation or cooling/heating operation is drained out through the waste pipe 13 connected to the drain pan 56, the optical detection unit 34 causes excitation light to be emitted from the LED 35. The excitation light with a wavelength of 360 nm propagates in the direction of an arrow "a", and reaches the biofilm 14. The biofilm 14 irradiated with the excitation light emits fluorescent light at a wavelength near 445 nm due to the fluorescent characteristics of riboflavin contained in the biofilm 14. The fluorescent light propagates in the direction of an arrow "b", and is received by the photodiode 36 to cause a voltage to be generated. The generated voltage is detected by the amplifier/detector circuit 21. As a result, the biofilm 14 is determined to be present, and an alert is output. If the excitation light emitted by the LED 35 does not reach the biofilm 14, the excitation light is applied to the bottom surface of the drain pan 56. Since the drain pan 56 does not exhibit fluorescent characteristics, the drain pan 56 does not emit fluorescent light even when irradiated with the excitation light. The excitation light reflected by the drain pan 56 is removed by the filter in the photodiode 36.

Instead of the LED 35 as a light emitting diode, for example, a semiconductor laser may be used. For the photodiode 36, a photomultiplier tube may be used as a photodetector element that detects light. As with ultrasound, light is also subject to reflection or scattering by the water surface, and hence it is desirable to perform detection with no drain water 22 present.

<Modification 2>

In Modification 2, an LED that emits ultraviolet, visible, or infrared light is used as the LED 35, and the photodiode 36 does not have a built-in filter to remove light.

The biofilm 14 exhibits optical reflection characteristics different from those of the drain pan 56. Ultraviolet, visible, or infrared light are emitted by the LED 35, and the presence or absence of the biofilm 14 is detected from the reflection characteristics of light detected by the photodiode 36. As for the center wavelength of light emitted by the LED 35, the biofilm 14 is often yellow-colored, and hence 590 nm, which a wavelength near yellow, may be used.

Although the foregoing description is directed to an exemplary configuration in which the drain water 22 is drained out through the waste pipe 13 connected to the drain pan 56, it is also possible to employ a configuration that includes the drain pump 29 and the drain pipe 30.

With the air-conditioning apparatus 108 according to Embodiment 8 described above, the optical detection unit 34 including the LED 35 and the photodiode 36 is disposed above the drain pan 56, and detection of the biofilm 14 is performed when the drain water 22 has been drained out. This configuration ensures that fluorescent light generated in response to the excitation light emitted by the LED 35 can be detected by the photodiode 36 without the influence of the drain water 22.

Embodiment 8

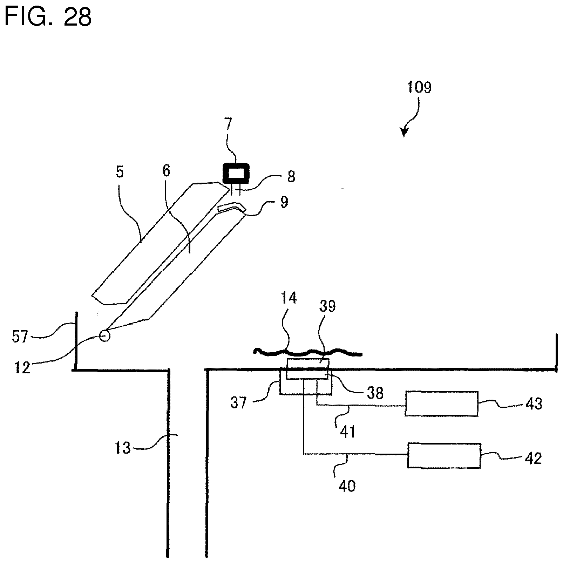

Fig. 28 is a schematic diagram illustrating, in cross-section, a portion of an air-conditioning apparatus 109 according to Embodiment 8 in the vicinity of a drain pan 57. As illustrated in Fig. 28, Embodiment 8 differs from Embodiments 1 to 7 in that a crystal oscillator detection unit 37 that includes a crystal oscillator 38 and a sensitive membrane 39 is provided to the bottom surface of the drain pan 57. Other features of Embodiment 8 are the same as Embodiments 1 to 7 and thus will not be described in further detail.

<Configuration in Vicinity of Drain Pan 57>

The crystal oscillator detection unit 37 includes the sensitive membrane 39 disposed on the top of the bottom surface of the drain pan 57, and the crystal oscillator 38 disposed on the underside of the bottom surface of the drain pan 57. The crystal oscillator 38 is electrically connected to a power supply 42 by an electric wire 40, and also electrically connected to a frequency analyzer 43 by an electric wire 41. As the sensitive membrane 39, a material having high affinity to the biofilm 14, such as polyolefin resin, is used.

<Detection of Biofilm 14>

When the drain water 22 pooled in the drain pan 57 during humidifying operation or cooling/heating operation is drained out through the waste pipe 13, in the crystal oscillator detection unit 37, the power supply 42 is activated to cause the crystal oscillator 38 to oscillate. At the same time, the resonant frequency is measured by the frequency analyzer 43 via the electric wire 41. The sensitive membrane 39 causes the resonant frequency of the crystal oscillator 38 to decrease when the biofilm 14 attaches to the sensitive membrane 39. Accordingly, when a decrease in the resonant frequency of the crystal oscillator 38 is detected, the biofilm 14 is determined to be present, and an alert is output.

Although the foregoing description is directed to an exemplary configuration in which the drain water 22 is drained out through the waste pipe 13 connected to the drain pan 57, it is also possible to employ a configuration that includes the drain pump 29 and the drain pipe 30.

With the air-conditioning apparatus 109 according to Embodiment 9 described above, the crystal oscillator detection unit 37 including the crystal oscillator 38 and the sensitive membrane 39 is disposed on the bottom surface of the drain pan 57, and detection of the biofilm 14 is performed when the drain water 22 has been drained out. This configuration ensures that the resonant frequency of the crystal oscillator 38 decreases when the biofilm 14 attaches to the sensitive membrane 39. This makes it possible to detect the biofilm 14 without the influence of the drain water 22.

Reference Signs List

1 housing 2 air inlet 3 filter 4 fan 5 heat exchanger 6 humidifying material 7 supply unit 8 nozzle 9 dispersing material 10 air outlet 11, 50, 51, 52, 53, 54, 55, 56, 57 drain pan 12 water droplet 13 waste pipe 14 biofilm 15 detection unit 16 ultrasound transmitter 17 ultrasound detector 18, 19 electric wire 20 power supply 21 amplifier/detector circuit 22 drain water 23 piezoelectric element 24 housing 25, 26 electrode 27, 28 lead wire 29 drain pump 29a suction port 30 drain pipe 31 scattering plate 32 water level sensor 34 optical detection unit 35 LED 36 photodiode 37 crystal oscillator detection unit 38 crystal oscillator 39 sensitive membrane 40,41 electric wire 42 power supply 43 frequency analyzer 44 mixture 45 division plate 100, 102, 103, 104, 105, 106, 107, 108, 109 air-conditioning apparatus

**Claims**

1. An air-conditioning apparatus (100) configured to perform at least cooling operation or humidifying operation, the air-conditioning apparatus (100) comprising:

   a drain pan (11,57) configured to receive water;
   **characterized by** the air-conditioning apparatus (100) further comprising

   a draining unit (13) disposed on the underside of the drain pan (11,57) and configured to drain water received in the drain pan (11,57); and
   a detection unit (15,37) integrated with the drain pan (11,57) and configured to detect a biofilm (14) formed in the drain pan (11,57),

   the detection unit (15,37) being configured to perform detection of the biofilm (14) in a state in which draining of water from the drain pan (11,57) is complete,
   wherein the detection unit (15) is adapted to transmit an ultrasonic wave and to detect an ultrasonic wave reflected back from the biofilm (14) to thereby determine the presence or absence of the biofilm (14), or wherein the detection unit (37) comprises a crystal oscillator detection unit (37) comprising a crystal oscillator (38), and a sensitive membrane (39) provided to the bottom surface of the drain pan (57).

**2.** The air-conditioning apparatus (100) of claim 1,
being configured so that drainage of water from the drain pan (11) is complete when a predetermined period of time elapses after the cooling operation or humidifying operation ends.

**3.** The air-conditioning apparatus (106) of claim 1 or 2, further comprising
a water level sensor (32) configured to detect a level of water received in the drain pan (54),
the air-conditioning apparatus (106) being configured to complete drainage of water from the drain pan (54) when a water level detected by the water level sensor (32) is zero or approximately equal to zero.

**4.** The air-conditioning apparatus (100) of any one of claims 1 to 3,
wherein the detection unit (15) includes

an ultrasound transmitter (16) configured to transmit an ultrasonic wave, and
an ultrasound detector (17) configured to detect the ultrasonic wave, and
wherein the ultrasound transmitter (16) is adapted to transmit the ultrasonic wave in a state in which drainage of water is complete.

**5.** The air-conditioning apparatus (100) of any one of claims 1 to 3,
wherein the detection unit (15) is provided below the drain pan (11).

**6.** The air-conditioning apparatus (107) of claim 4,
wherein the ultrasound detector (17) is configured to detect an ultrasonic wave transmitted from the ultrasound transmitter (16) and passed through the biofilm (14).

**7.** The air-conditioning apparatus (100) of claim 4,
wherein the ultrasound detector (17) is configured to detect an ultrasonic wave transmitted from the ultrasound transmitter (16) and reflected by the biofilm (14).

**8.** The air-conditioning apparatus (104) of any one of claims 1 to 7,
wherein a reflecting plate (31) configured to reflect an ultrasonic wave is provided above the detection unit (15).

**9.** The air-conditioning apparatus (103) of any one of claims 1 to 8,
wherein the drain pan (51) has a region that is sloped with respect to a horizontal plane.

**10.** The air-conditioning apparatus (102) of any one of claims 1 to 9,
wherein the draining unit (13) includes

a drain pump (29) provided above the drain pan (11) to suck up water in the drain pan (11) from a suction port (29a), and
a drain pipe (30) to drain water sucked up by the drain pump (29), and
wherein the suction port (29a) and the detection unit (16) are positioned at identical horizontal levels, or the suction port (29a) is positioned at a lower level than the detection unit (16).

**11.** The air-conditioning apparatus (100) of any one of claims 1 to 3,
wherein the detection unit (15) incudes

an ultrasonic element (23) configured to transmit and receive an ultrasonic wave, and
a reflecting plate (31) configured to reflect an ultrasonic wave,
wherein the reflecting plate (31) is a scattering plate (31) made of a material having sound absorbability;

wherein the detection unit (15) is adapted to detect the biofilm (14) when an ultrasonic wave transmitted from the ultrasonic element (23) and reflected by the biofilm (14) is received by the ultrasonic element (23), and
wherein an ultrasonic wave transmitted from the ultrasonic element (23) and reflected by the reflecting plate (31) is not received by the ultrasonic element (23).

**Patentansprüche**

1. Klimatisierungsgerät (100), das ausgelegt ist, um zumindest einen Kühlvorgang oder einen Befeuchtungsvorgang durchzuführen, wobei das Klimatisierungsgerät (100) Folgendes umfasst:

   eine Auffangwanne (11, 57) die ausgelegt ist, um Wasser aufzunehmen;
   **dadurch gekennzeichnet, dass** das Klimatisierungsgerät (100) ferner Folgendes umfasst:

   eine Ablaufeinheit (13), die an der Unterseite der Auffangwanne (11, 57) angeordnet ist und ausgelegt ist, um in der Auffangwanne (11, 57) aufgenommenes Wasser abzuleiten; und
   eine Detektionseinheit (15, 37), die einstückig mit der Auffangwanne (11, 57) ausgebildet ist und ausgelegt ist, einen in der Auffangwanne (11, 57) ausgebildeten Biofilm zu detektieren,

   wobei die Detektionseinheit (11, 37) ausgelegt ist, um die Detektion des Biofilms (14) in einem Zustand durchzuführen, in dem das Ableiten von Wasser aus der Auffangwanne (11, 57) abgeschlossen ist,
   wobei die Detektionseinheit (15) geeignet ist, um eine Ultraschallwelle auszusenden und eine von dem Biofilm (14) zurückreflektierte Ultraschallwelle zu detektieren, um dadurch das Vorliegen oder Fehlen des Biofilms (14) zu bestimmen, oder
   wobei die Detektionseinheit (37) eine Kristalloszillatordetektionseinheit (37), die einen Kristalloszillator (38) umfasst, und eine empfindliche Membran (39) umfasst, die auf der Bodenfläche der Auffangwanne (57) bereitgestellt ist.

2. Klimatisierungsgerät (100) nach Anspruch 1, das so ausgelegt ist, dass das Ableiten von Wasser aus der Auffangwanne (11) abgeschlossen ist, wenn ein vorbestimmter Zeitraum nach Beendigung des Kühlvorgangs oder des Befeuchtungsvorgangs vergangen ist.

3. Klimatisierungsgerät (106) nach Anspruch 1 oder 2, das ferner Folgendes umfasst:

   einen Wasserstandsensor (32), der ausgelegt ist, um den Stand des in der Auffangwanne (54) aufgenommenen Wassers zu detektieren,
   wobei das Klimatisierungsgerät (106) ausgelegt ist, um das Ableiten von Wasser aus der Auffangwanne (54) abzuschließen, wenn der durch den Wasserstandsensor (32) detektierte Wasserstand null oder etwa gleich null ist.

4. Klimatisierungsgerät (100) nach einem der Ansprüche 1 bis 3, wobei die Detektionseinheit (15) Folgendes umfasst:

   einen Ultraschallsender (16), der ausgelegt ist, um eine Ultraschallwelle auszusenden, und
   einen Ultraschalldetektor (17), der ausgelegt ist, um die Ultraschallwelle zu detektieren, wobei der Ultraschallsender (16) geeignet ist, um die Ultraschallwelle in einem Zustand auszusenden, in dem das Ableiten des Wassers abgeschlossen ist.

5. Klimatisierungsgerät (100) nach einem der Ansprüche 1 bis 3, wobei die Detektionseinheit (15) unterhalb der Auffangwanne (11) bereitgestellt ist.

6. Klimatisierungsgerät (107) nach Anspruch 4, wobei der Ultraschalldetektor (17) ausgelegt ist, um eine von dem Ultraschallsender (16) ausgesendete Ultraschallwelle, die durch den Biofilm (14) hindurchgetreten ist, zu detektieren.

7. Klimatisierungsgerät (100) nach Anspruch 4, wobei der Ultraschalldetektor (17) ausgelegt ist, um eine von dem Ultraschallsender (16) ausgesendete und von dem Biofilm (14) reflektierte Ultraschallwelle zu detektieren.

8. Klimatisierungsgerät (104) nach einem der Ansprüche 1 bis 7, wobei eine reflektierende Platte (31), die ausgelegt ist, um eine Ultraschallwelle zu reflektieren, oberhalb der Detektionseinheit (15) bereitgestellt ist.

9. Klimatisierungsgerät (103) nach einem der Ansprüche 1 bis 8, wobei die Auffangwanne (51) einen Bereich aufweist, der in Bezug auf eine horizontale Ebene geneigt ist.

10. Klimatisierungsgerät (102) nach einem der Ansprüche 1 bis 9, wobei die Ablaufeinheit (13) Folgendes umfasst:

eine Ablaufpumpe (29), die oberhalb der Auffangwanne (11) bereitgestellt ist, um Wasser in der Auffangwanne (11) durch eine Saugöffnung (29a) aufzusaugen, und

ein Ablaufrohr (30), um durch die Ablaufpumpe (29) aufgesaugtes Wasser abzuleiten, wobei die Saugöffnung (29a) und die Detektionseinheit (16) auf denselben horizontalen Ebenen angeordnet sind oder die Saugöffnung (29a) auf einer niedrigeren Ebene als die Detektionseinheit (16) angeordnet ist.

**11.** Klimatisierungsgerät (100) nach einem der Ansprüche 1 bis 3, wobei die Detektionseinheit (15) Folgendes umfasst:

ein Ultraschallelement (23), das ausgelegt ist, um eine Ultraschallwelle auszusenden und zu empfangen; und eine reflektierende Platte (31), die ausgelegt ist, um eine Ultraschallwelle zu reflektieren, wobei die reflektierende Platte (31) eine Streuungsplatte (31) aus einem Material mit Schallabsorptionsfähigkeit ist;

wobei die Detektionseinheit (15) geeignet ist, um den Biofilm (14) zu detektieren, wenn eine von dem Ultraschallelement (23) ausgesendete und durch den Biofilm (14) reflektierte Ultraschallwelle durch das Ultraschallelement (23) empfangen wird, und

wobei eine durch das Ultraschallelement (23) ausgesendete und durch die reflektierende Platte (31) reflektierte Ultraschallwelle nicht durch das Ultraschallelement (23) empfangen wird.

## Revendications

**1.** Appareil de climatisation (100) configuré pour effectuer au moins une opération de refroidissement ou une opération d'humidification, l'appareil de climatisation (100) comprenant :

un bac de vidange (11, 57) configuré pour recevoir de l'eau ;
**caractérisé en ce que** l'appareil de climatisation (100) comprend en outre
une unité de vidange (13) disposée sur la face inférieure du bac de vidange (11, 57) et configurée pour vidanger l'eau reçue dans le bac de vidange (11, 57) ; et
une unité de détection (15,37) intégrée au bac de vidange (11, 57) et configurée pour détecter un biofilm (14) formé dans le bac de vidange (11, 57),
l'unité de détection (15,37) étant configurée pour effectuer la détection du biofilm (14) dans un état dans lequel la vidange de l'eau à partir du bac de vidange (11, 57) est terminée,
dans lequel l'unité de détection (15) est adaptée pour transmettre une onde ultrasonore et pour détecter une onde ultrasonore réfléchie par le biofilm (14) pour déterminer ainsi la présence ou l'absence du biofilm (14), ou
dans lequel l'unité de détection (37) comprend une unité de détection à oscillateur à cristal (37) comprenant un oscillateur à cristal (38), et une membrane sensible (39) fournie à la surface inférieure du bac de vidange (57).

**2.** Appareil de climatisation (100) selon la revendication 1,
configuré de telle sorte que la vidange de l'eau à partir du bac de vidange (11) soit terminée lorsqu'une période de temps prédéterminée s'est écoulée après la fin de l'opération de refroidissement ou de l'opération d'humidification.

**3.** Appareil de climatisation (106) selon la revendication 1 ou 2, comprenant en outre
un capteur de niveau d'eau (32) configuré pour détecter un niveau d'eau reçu dans le bac de vidange (54),
l'appareil de climatisation (106) étant configuré pour achever la vidange de l'eau à partir du bac de vidange (54) lorsqu'un niveau d'eau détecté par le capteur de niveau d'eau (32) est nul ou approximativement égal à zéro.

**4.** Appareil de climatisation (100) selon l'une quelconque des revendications 1 à 3,
dans lequel l'unité de détection (15) comprend
un émetteur à ultrasons (16) configuré pour transmettre une onde ultrasonore, et
un détecteur à ultrasons (17) configuré pour détecter l'onde ultrasonore, et
dans lequel l'émetteur à ultrasons (16) est adapté pour transmettre l'onde ultrasonore dans un état où la vidange de l'eau est achevée.

**5.** Appareil de climatisation (100) selon l'une quelconque des revendications 1 à 3,
dans lequel l'unité de détection (15) est prévue sous le bac de vidange (11).

**6.** Appareil de climatisation (107) selon la revendication 4,
dans lequel le détecteur à ultrasons (17) est configuré pour détecter une onde ultrasonore transmise par l'émetteur à ultrasons (16) et ayant traversé le biofilm (14).

7. Appareil de climatisation (100) selon la revendication 4,
dans lequel le détecteur à ultrasons (17) est configuré pour détecter une onde ultrasonore transmise par l'émetteur à ultrasons (16) et réfléchie par le biofilm (14).

8. Appareil de climatisation (104) selon l'une quelconque des revendications 1 à 7,
dans lequel une plaque réfléchissante (31) configurée pour réfléchir une onde ultrasonore est prévue au-dessus de l'unité de détection (15).

9. Appareil de climatisation (103) selon l'une quelconque des revendications 1 à 8,
dans lequel le bac de vidange (51) a une région qui est inclinée par rapport à un plan horizontal.

10. Appareil de climatisation (102) selon l'une quelconque des revendications 1 à 9,
dans lequel l'unité de vidange (13) comprend
une pompe de vidange (29) prévue au-dessus du bac de vidange (11) pour aspirer de l'eau dans le bac de vidange (11) à partir d'un orifice d'aspiration (29a), et
un tuyau de vidange (30) pour vidanger l'eau aspirée par la pompe de vidange (29), et
dans lequel l'orifice d'aspiration (29a) et l'unité de détection (16) sont positionnés à des niveaux horizontaux identiques, ou l'orifice d'aspiration (29a) est positionné à un niveau plus bas que l'unité de détection (16).

11. Appareil de climatisation (100) selon l'une quelconque des revendications 1 à 3,
dans lequel l'unité de détection (15) comprend
un élément ultrasonore (23) configuré pour émettre et recevoir une onde ultrasonore, et
une plaque réfléchissante (31) configurée pour réfléchir une onde ultrasonore,
dans lequel la plaque réfléchissante (31) est une plaque de diffusion (31) constituée d'un matériau ayant une capacité d'absorption acoustique ;
dans lequel l'unité de détection (15) est adaptée pour détecter le biofilm (14) lorsqu'une onde ultrasonore transmise par l'élément ultrasonique (23) et réfléchie par le biofilm (14) est reçue par l'élément ultrasonore (23), et
dans lequel une onde ultrasonore transmise depuis l'élément ultrasonore (23) et réfléchie par la plaque réfléchissante (31) n'est pas reçue par l'élément ultrasonore (23).

FIG. 1

FIG. 2

## FIG. 3

## FIG. 4

```
         ┌─────────────────────────┐
         │        START OF         │
         │   APPARATUS OPERATION   │
         └─────────────────────────┘
                      │
                      ▼
S 1    ┌─────────────────────────────┐  NO
       <         HUMIDIFY?            >──────┐
       └─────────────────────────────┘      │
                    │YES                     │
                    ▼                        │
         ┌─────────────────────────┐         │
         │       HUMIDIFYING       │         │
         │       OPERATION         │         │
         └─────────────────────────┘         │
                    │◄───────────────────────┘
                    ▼
S 2    ┌─────────────────────────────┐  NO
       <      COOLING/HEATING         >──────┐
       <         REQUIRED?            >      │
       └─────────────────────────────┘      │
                    │YES                     │
                    ▼                        │
         ┌─────────────────────────┐         │
         │     COOLING/HEATING      │        │
         │       OPERATION          │        │
         └─────────────────────────┘         │
                    │◄───────────────────────┘
                    ▼
S 3      ┌─────────────────────────┐
         │        DRAIN OUT        │
         │       DRAIN WATER       │◄──────┐
         └─────────────────────────┘       │
                    │                       │
                    ▼                       │
S 4    ┌─────────────────────────────┐  NO │
       <     DRAINING OF DRAIN        >─────┘
       <     WATER COMPLETE?          >
       <    (ONE TO TWO HOURS)        >
       └─────────────────────────────┘
                    │YES
                    ▼
S 5      ┌─────────────────────────┐
         │    DETECT BIOFILM BY    │
         │   DETECTION UNIT 15     │
         └─────────────────────────┘
                    │
                    ▼
S 6    ┌─────────────────────────────┐  NO
       <       PRESET VALUE           >──────────────┐
       <        EXCEEDED?             >              │
       └─────────────────────────────┘              │
                    │YES                             │
                    ▼                                ▼
S 7  ┌─────────────────────┐      S 8  ┌─────────────────────┐
     │      ALERT FOR      │           │        STOP         │
     │  NEED OF CLEANING   │           │     OPERATION       │
     └─────────────────────┘           └─────────────────────┘
```

FIG. 5

FIG. 6

FIG. 7

FIG. 8

FIG. 9

FIG. 10

## FIG. 11

## FIG. 12

## FIG. 13

## FIG. 14

FIG. 15

FIG. 16

FIG. 17

FIG. 18

FIG. 19

FIG. 20

FIG. 21

FIG. 22

## FIG. 23

## FIG. 24

FIG. 25

FIG. 26

FIG. 27

FIG. 28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001021208 A
- JP 2014052095 A
- JP 4257076 B
- EP 2975395 A1
- US 2008215248 A1
- US 2011112776 A1
- JP H05141686 A
- US 5966959 A
- WO 2011013446 A1